(19) Europäisches Patentamt
European Patent Office
Office européen des brevets

(11) **EP 3 670 589 B1**

(12) **EUROPÄISCHE PATENTSCHRIFT**

(45) Veröffentlichungstag und Bekanntmachung des Hinweises auf die Patenterteilung:
**01.04.2026   Patentblatt 2026/14**

(21) Anmeldenummer: **19216380.6**

(22) Anmeldetag: **16.12.2019**

(51) Internationale Patentklassifikation (IPC):
**C08K 3/34** *(2006.01)*       **C08K 5/10** *(2006.01)*
**C08K 5/20** *(2006.01)*       **C08K 9/06** *(2006.01)*
C08K 3/22 *(2006.01)*       C08K 5/01 *(2006.01)*
C08K 5/09 *(2006.01)*       C08K 5/098 *(2006.01)*
C08K 5/544 *(2006.01)*

(52) Gemeinsame Patentklassifikation (CPC):
(C-Sets verfügbar)
**C08K 9/06; C08K 3/34; C08K 5/10; C08K 5/20;**
C08K 3/22; C08K 5/01; C08K 5/09; C08K 5/098;
C08K 2003/2227                                   (Forts.)

(54) **POLYAMIDZUSAMMENSETZUNGEN**

POLYAMIDE COMPOSITIONS

COMPOSITIONS DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2018   EP 18214367**

(43) Veröffentlichungstag der Anmeldung:
**24.06.2020   Patentblatt 2020/26**

(73) Patentinhaber: **Envalior Deutschland GmbH**
**40474 Düsseldorf (DE)**

(72) Erfinder:
• KOERTE, Leif Arne
  40474 DÜSSELDORF (DE)
• JOACHIMI, Detlev
  40474 DÜSSELDORF (DE)
• SCHÜTZ, Katharina
  40474 DÜSSELDORF (DE)
• THEILER, Stefan
  40474 DÜSSELDORF (DE)
• SCHULTE, Maik
  40474 DÜSSELDORF (DE)

(74) Vertreter: **Envalior Association**
**Urmonderbaan 22**
**6167 RD Geleen (NL)**

(56) Entgegenhaltungen:
CN-A- 107 674 304          CN-B- 105 219 216
DE-A1- 102007 019 179      GB-A- 1 457 815

• LV ET AL: "Preparation method of thermoplastic abrasive material for polishing hard alloys", CA, CHEMICAL ABSTRACTS SERVICE, COLUMBUS, OHIO, US, 21 June 2019 (2019-06-21), XP002792267
• WANG ET AL: "Anti-cavitation abrasion-resistant ceramic-reinforced epoxy resin coatings for flow passage mechanical components", CA, CHEMICAL ABSTRACTS SERVICE, COLUMBUS, OHIO, US, 21 June 2019 (2019-06-21), XP002792268
• DE A. PRADO LUIS A S ET AL: "POLYAMIDE 12 /ALUMINA NANOCOMPOSITES - THERMAL AND MECHANICAL PROPERTIES", 9 CONGRESSO BRASILEIRO DE POLIMEROS, 1 January 2007 (2007-01-01), XP055956530, Retrieved from the Internet <URL:https://www.ipen.br/biblioteca/cd/cbpol/2007/PDF/117.pdf> [retrieved on 20220831]
• MAIA JR BR�ULIO: "9 Congresso Brasileiro de Polimeros", POLIMEROS: CI�NCIA E TECNOLOGIA, VOL. 17, NO. 4, 2007, 1 January 2007 (2007-01-01), XP055956529, Retrieved from the Internet <URL:https://www.scielo.br/j/po/a/JLqWD7rnvKXS7CySYMSkFVH/?format=pdf&lang=pt> [retrieved on 20220831]

EP 3 670 589 B1

(52) Gemeinsame Patentklassifikation (CPC): (Forts.)

C-Sets
**C08K 3/34, C08L 77/00;**
**C08K 5/10, C08L 77/00;**
**C08K 5/20, C08L 77/00;**
**C08K 9/06, C08L 77/00**

## Beschreibung

Die vorliegende Erfindung betrifft ein Verfahren zur Reduzierung der Abrasivität Aluminiumoxid enthaltender Polyamidzusammensetzungen bzw. die Verwendung von mit wenigstens einem Aminosilan oberflächenbehandeltem Aluminiumoxid in wärmeleitfähigen Polyamidzusammensetzungen zur Verringerung der Abrasion in Verarbeitungsmaschinen und Verarbeitungswerkzeugen und entsprechende Zusammensetzungen, daraus herzustellende Formmassen und darauf basierende Erzeugnisse.

## Stand der Technik

Dem Fachmann ist der Einsatz von Aluminiumoxid als Schleifmittel bekannt. Aluminiumoxid wird aus Bauxit gewonnen, indem dieser nach dem Bayer-Verfahren mit Natronlauge aufgeschlossen wird. Durch Entziehen des Wassers, zum Beispiel durch Brennen, Sintern oder Kalzinieren, erhält man das Aluminiumoxid. Man unterscheidet das kubische $\gamma$-$Al_2O_3$, sogenannte Tonerde, die als Ausgangsstoff zur Keramik- und Aluminiumherstellung dient, und das rhomboedrische/trigonale $\alpha$-$Al_2O_3$, bekannt als Mineral Korund, Saphir oder bei Chromdotierung als Rubin.

Aufgrund seiner thermodynamischen Stabilität wird vorzugsweise $\alpha$-$Al_2O_3$ mit einer Dichte von 3,98, einer Mohshärte von 9 und einem Schmelzpunkt von 2053°C als Schleifmittel eingesetzt.

In WO2010/025857A1 wird zur Herstellung von Schleifmitteln das dabei einzusetzende Aluminiumoxid mit organischem Silan oberflächenbehandelt und in eine Kunstharzmatrix eingebracht. In den Beispielen werden als Silane explizit 3-Aminopropyltriethoxysilan und 3-Methacryloxypropyltrimethoxysilan genannt.

Die Erhöhung der Wärmeleitfähigkeit Polyamid basierter Formmassen und daraus herzustellender Erzeugnisse durch Zusatz von Aluminiumoxid ($Al_2O_3$) ist dem Fachmann aus WO2009/019186 A1bekannt. Aufgrund seiner Mohshärte von 9 und dem dadurch bedingten hohen Verschleiß in Verarbeitungsmaschinen, insbesondere den Werkzeugen von Spritzgussmaschinen, hat sich Aluminiumoxid jedoch zur Herstellung wärmeleitfähiger Kunststoffzusammensetzungen bisher nicht durchgesetzt. Zusätzlich wurde gefunden, dass der Einsatz von Aluminiumoxid zu einer deutlichen Versprödung eines Compounds bzw. daraus herzustellender Erzeugnisse führt und zudem einen negativen Einfluss auf die Verformungsbeständigkeit bzw. Bruchdehnung sowie die Schlagzähigkeit Polyamid basierter Erzeugnisse hat.

Die Bruchdehnung ist ein Materialkennwert, der die bleibende Verlängerung einer Probe nach dem Bruch, bezogen auf die Anfangsmesslänge, angibt und stellt damit eine wesentliche Kenngröße zur Charakterisierung der Verformungsfähigkeit bzw. Duktilität eines Werkstoffes dar (siehe hierzu: **http://de.wikipedia.org/wiki/Bruchdehnung).** Gemessen wird die Bruchdehnung im Zugversuch nach ISO527 z.B. an spritzgegossenen Probekörpern. Die Schlagzähigkeit hingegen beschreibt die Fähigkeit eines Werkstoffes, Stoßenergie und Schlagenergie zu absorbieren ohne zu brechen. Die Schlagzähigkeit wird berechnet als das Verhältnis aus Schlagarbeit und Probenkörperquerschnitt (Maßeinheit: $kJ/m^2$). Durch verschiedene Arten des Schlagbiegeversuchs (Charpy, Izod) kann die Schlagzähigkeit bestimmt werden. Gemessen wird die Schlagzähigkeit nach ISO180-1U z.B. an spritzgegossenen Probekörpern.

(siehe hierzu: **http://de.wikipedia.org/wiki/Schlagz%C3%A4higkeit).**

## Aufgabe der vorliegenden Erfindung

Aufgabe der vorliegenden Erfindung war die Bereitstellung wärmeleitfähiger sowie elektrisch isolierender und zu diesem Zweck Aluminiumoxid enthaltender Polyamidzusammensetzungen mit gegenüber der oben zitierten WO 2009/019186 A1 verbesserten mechanischen Eigenschaften und akzeptabler oder gegebenenfalls verbesserter Wärmeleitfähigkeit sowie verbessertem Abrasionsverhalten bei ansonsten vergleichbarer Zusammensetzung hinsichtlich weiterer Additive.

EineReduktion der mechanischen Eigenschaften ist erfindungsgemäß akzeptabel, wenn diese erst nach Einwirken von erhöhten Temperaturen über längere Zeiträume signifikant auftritt, wobei erhöhte Temperaturen T > 100°C und längere Zeiträume t > 1000 h bedeuten.

Das Verschleißverhalten von Verarbeitungsmaschinen, im folgenden "Abrasion" genannt, insbesondere in Extrudern und in Spritzgussmaschinen, wurde im Rahmen der vorliegenden Erfindung in Anlehnung an den Verschleißtest des Deutschen Kunststoffinstituts DKI Darmstadt **(Veröffentlichung FG Kunststoffe, "Neu- und Weiterentwicklung von Modellprüfverfahren für den korrosiv/abrasiven Verschleiß bei der Kunststoffverarbeitung", Projekt-Nr. AiF 12245N (DKI 18/0-87), Laufzeit 01.12.1999 bis 28.02.2003)** nachgestellt.

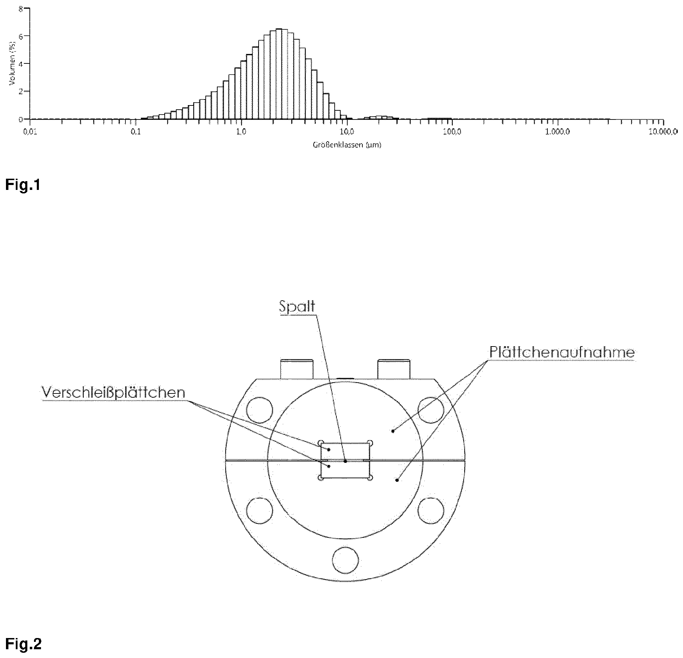

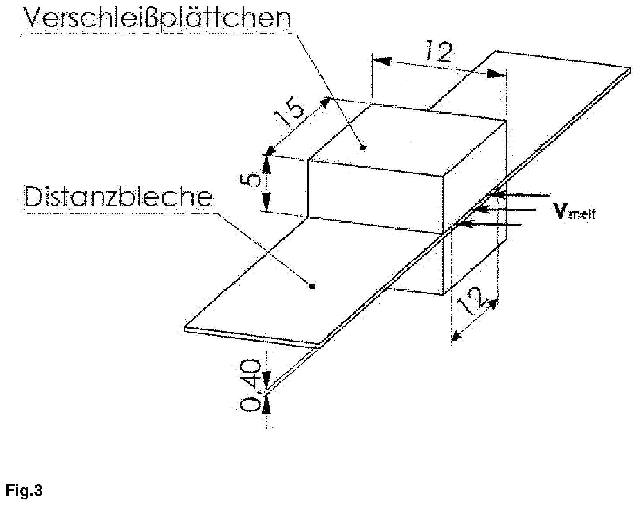

Ein geringer Verschleiß oder ein gutes Verschleißverhalten (=Abrasion) in Verarbeitungsmaschinen bzw. Verarbeitungswerkzeugen bedeutet im Rahmen der vorliegenden Erfindung, dass nur ein technisch vertretbarer Materialabtrag beim Spritzguss der zu untersuchenden Polyamidzusammensetzung von 100 Schuss (1 Schuss = 3D), mit einer Einspritzgeschwindigkeit *v* von *v* = 30 mm/s und einem Schneckendurchmesser D von D = 35 mm, bei einer Massetemperatur von 290°C durch eine Düse bestehend aus zwei Metallplättchen (Stahl: 1.2738) mit der Schlitzbreite *b* = 12 mm, der Schlitzlänge I = 12 mm und der Schlitzhöhe *h* = 0,4 mm zu beobachten ist. *V* beschreibt den Volumenstrom, der durch die Plättchen im Spritzprozess hindurch tritt. Ein Materialabtrag an dem im Rahmen der vorliegenden Erfindung verwendeten Stahl 1.2738 (Kurzname 40CrMnNiMo8-6-4 und lt. **Datenblatt Dörrenberg Edelstahl GmbH, Engelskirchen, aus 02/2017** mit der chemischen Zusammensetzung C = 0,4%, Mn = 1,5%, Cr = 1,9%, Ni = 1,0%, Mo = 0,2%) von unter 200 mg wird im Sinne der vorliegenden Erfindung als technisch vertretbar erachtet, um dem Anwender/Verarbeiter bei Verwendung eines geeignet gehärteten und ggf. oberflächen beschichteten Stahls eine technische Verarbeitbarkeit Aluminiumoxid enthaltender Polyamidzusammensetzungen im Spritzgussprozess zu ermöglichen. **Fig.2** und **Fig.3** zeigen schematische Darstellungen der erfindungsgemäß zur Ermittlung der Abrasion eingesetzten Verschleißapperatur sowie der Plättchenanordnung und Geometrie der erfindungsgemäß verwendeten Messvorrichtung.

Kennt der Fachmann die Schusszahl, die Schussgeschwindigkeit und die Schussmenge (Schussmenge = Schneckenvorschub = 3D = 3 mal Schneckendurchmesser), kann er daraus ein V = Volumen

$$V = 3\,D\,\cdot\pi\cdot\left(\frac{D}{2}\right)^2$$

berechnen, womit die Menge, die durch den Metallschlitz gedrückt wurde, definiert ist. Die scheinbare Schergeschwindigkeit $\dot{\gamma}_{ap}$ kann der Fachmann mit der Formel

$$\dot{\gamma}_{ap} = \frac{6\,\cdot\dot{V}}{b\,\cdot\,h^2}$$

mit dem $V$ = Volumenschmelzestrom

$$\dot{V} = v\,\cdot\pi\left(\frac{D}{2}\right)^2,$$

der Schlitzbreite $b$, der Schlitzhöhe $h$, dem Schneckendurchmesser D und der Einspritzgeschwindigkeit v ebenfalls berechnen. Durch Differenzwägung der Metallplättchen vor und nach dem Versuch läßt sich der Materialabtrag ermitteln.

Gute mechanische Eigenschaften im Sinne der vorliegenden Erfindung bedeutet eine Bruchdehnung von wenigstens 1,5% gemessen nach ISO527 an spritzfrischen Probekörpern, wobei die Bruchdehnung der zuletzt aufgezeichnete Dehnungswert ist, bevor ein Spannungsabfall auf weniger als oder gleich 10 % des Festigkeitswerts erfolgt. Die Bruchdehnung wird als Größe der Dimension 1 oder in Prozent (%) angegeben. Bei Brüchen oberhalb der Streckgrenze wird die nominelle Bruchdehnung angegeben. Diese ist der letzte aufgezeichnete nominelle Dehnungswert, bevor ein Spannungsabfall auf weniger als oder gleich 10 % des Festigkeitswerts erfolgt. Die nominelle Dehnung wird anhand der Messwerte zwischen den Einspannklemmen bestimmt. Siehe: **https://de.wikipedia.org/wiki/Bruchdehnung?veaction=edit&section=6#Definition_2**

Eine hohe Schlagzähigkeit im Sinne der vorliegenden Erfindung bedeutet eine Schlagzähigkeit von mindestens 20 kJ/m$^2$ gemessen nach ISO180-1U an spritzfrischen Probekörpern. Eine im Rahmen der vorliegenden Erfindung für ein erfindungsgemäßes Erzeugnis akzeptable Wärmeleitfähigkeit ist eine Wärmeleitfähigkeit gemessen nach ISO 22007-4 von mindestens 0.8 W/mK an spritzfrischen Probekörpern sowohl in, als auch senkrecht zur Fließrichtung des untersuchten Probekörpers.

Elektrisch isolierend im Sinne der vorliegenden Erfindung bedeutet, dass der Volumenwiderstand an spritzfrischen Probekörpern gemessen nach IEC60093 über 10$^9$ Ohm m beträgt.

Polyamide werden industriell mit unterschiedlichen Viskositäten produziert. Marktüblich für Polyamid 6, sowie Polyamid 66 und deren Copolyamide sind Lösungsviskositäten im Bereich von 140 - 155 ml/g gemessen nach ISO307 in 96%iger Schwefelsäure. Niedrigviskose Polyamide werden seltener eingesetzt. Deren Lösungsviskosität gemessen in 96%iger Schwefelsäure nach ISO307 beträgt <135 ml/g. Vorzugsweise liegt die Lösungsviskosität niedrigviskoser Polyamide im Bereich von 95 bis 135 ml/g.

Überraschenderweise wurde gefunden, dass Polyamidzusammensetzungen sowie daraus herzustellende Erzeugnisse, deren Wärmeleitfähigkeit durch hohen Gehalt an Aluminiumoxid verbessert wird, bei der Spritzgießverarbeitung in Verarbeitungsmaschinen deutlich geringere Abrasion an den Werkzeugen unter Beibehaltung ihrer mechanischen Eigenschaften zeigen, wenn das Aluminiumoxid vor seiner Verarbeitung im Polyamid zu einer Formmasse mit wenigstens einem Aminosilan oberflächenbehandelt wird und für die Verarbeitung zu einer Formmasse eine Polyamidmatrix mit niedriger Viskosität eingesetzt wird. Da dem Fachmann bekannt ist, dass die Abrasion vom Füllstoffgehalt eines Compounds abhängt, ist der erfinderische Effekt an Zusammensetzungen zu prüfen, die, abgesehen vom Aluminiumoxid, ansonsten dieselben Mengen an Additiven/Zusatzstoffen enthalten.

**Lösung der Aufgabe:**

Gegenstand der vorliegenden Erfindung ist ein Verfahren zur Reduzierung der Abrasivität wärmeleitfähiger Polyamidzusammensetzungen und daraus herzustellender Formmassen, dadurch gekennzeichnet, dass Aluminiumoxid, dessen Oberfläche mit wenigstens einem Aminosilan oberflächenbehandelt ist, mit einer Polyamidzusammensetzung in Kontakt gebracht wird und die Polyamidzusammensetzung auf einem niedrigviskosen Polyamid mit einer Lösungsviskosität gemessen in einer 0,5 gew-%igen Lösung in 96%iger Schwefelsäure nach ISO307 von <135 ml/g basiert und das Aluminiumoxid eine nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m aufweist, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten.

Die Erfindung betrifft zudem die Verwendung von mit wenigstens einem Aminosilan oberflächenbehandeltem Aluminiumoxid zur Reduzierung der Abrasion in Verarbeitungsmaschinen bei der Verarbeitung von Polyamidzusammensetzungen und darauf basierenden Polyamidformmassen mit niedrigviskosem Polyamid und das Polyamid eine Lösungsviskosität gemessen in einer 0,5 gew.%igen Lösung in 96%iger Schwefelsäure nach ISO307 von <135 ml/g aufweist, wobei das Aluminiumoxid eine nach ISO 13320 monomodale, volumenmittlere Partikelgrößenverteilung und eine volumenmittlere Partikelgröße d50 im Bereich von 0,1 bis 50 $\mu$m aufweist und eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten.

Im Rahmen der vorliegenden Erfindung wird als Referenz Aluminiumoxid ohne Aminosilan-Oberflächenbehandlung sowie eine Polyamidmatrix mit marktüblicher Viskosität betrachtet.

Die Erfindung betrifft aber auch Zusammensetzungen, daraus herzustellende Formmassen und darauf basierende Erzeugnisse enthaltend auf

a) 100 Massenanteile Polyamid, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96% iger Schwefelsäure von kleiner 135 ml/g,

b) 125 bis 600 Massenanteile mit wenigstens einem Aminosilan oberflächenbehandeltes Aluminiumoxid ($Al_2O_3$) mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten.

In einer Ausführungsform enthalten erfindungsgemäße Zusammensetzungen und die daraus herzustellenden Formmassen sowie Erzeugnisse zusätzlich zu den Komponenten a) und b) als Komponente c) wenigstens einen Thermostabilisator. Somit betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96% iger Schwefelsäure von kleiner 135 ml/g,

b) 125 bis 600 Massenanteile mit wenigstens einem Aminosilan oberflächenbehandeltes Aluminiumoxid $Al_2O_3$, mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole oder der Kupferhalogenide, eingesetzt werden.

In einer Ausführungsform enthalten erfindungsgemäße Zusammensetzungen und die daraus herzustellenden Formmassen sowie Erzeugnisse zusätzlich zu den Komponenten a), b) und c) als Komponente d) wenigstens ein Entformungsmittel und/oder Nukleierungsmittel. Somit betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96% iger Schwefelsäure von kleiner 135 ml/g,

b) 125 bis 600 Massenanteile mit wenigstens einem Aminosilan oberflächenbehandeltes Aluminiumoxid $Al_2O_3$, mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole oder der Kupferhalogenide, und

d) 0.001 bis 10 Massenanteile wenigstens eines Entformungsmittels und/oder Nukleierungsmittels eingesetzt werden.

In einer Ausführungsform enthalten erfindungsgemäße Zusammensetzungen und die daraus herzustellenden Formmassen sowie Erzeugnisse wenigstens ein von den Komponenten b), c) und d) verschiedenes Additiv. Somit betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96% iger Schwefelsäure von kleiner 135 ml/g,

b) 125 bis 600 Massenanteile mit wenigstens einem Aminosilan oberflächenbehandeltes Aluminiumoxid $Al_2O_3$, mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, Benzophenone, der polyhydrischen Alkohole oder der Kupferhalogenide,

d) 0.001 bis 10 Massenanteile wenigstens eines Entformungsmittels und/oder Nukleierungsmittels, und

e) 0.001 bis 150 Massenanteile wenigstens eines von den Komponenten b), c) und d) verschiedenen Additivs eingesetzt werden.

In einer Ausführungsform betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96% iger Schwefelsäure von kleiner 135 ml/g,

b) 125 bis 600 Massenanteile mit wenigstens einem Aminosilan oberflächenbehandeltes Aluminiumoxid $Al_2O_3$, mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole oder der Kupferhalogenide,

d) 0.001 bis 10 Massenanteile Talkum und/oder wenigstens ein Entformungsmittel, und

e) 0.001 bis 150 Massenanteile wenigstens eines weiteren, von den Komponenten b), c) und d) verschiedenen Additivs eingesetzt werden.

Vorzugsweise weist eine erfindungsgemäße Zusammensetzung bzw. daraus herzustellende Formmassen und darauf basierende Erzeugnisse eine nach ISO 22007-4 zu bestimmende Wärmeleitfähigkeit im Bereich von 0,8 bis 10 W/m·K, besonders bevorzugt im Bereich von 0.8 bis 8 W/m•K, ganz besonders bevorzugt im Bereich von 1 bis 6 W/m·K, auf, sowohl in als auch senkrecht zur Fließrichtung des zu untersuchenden Probekörpers.

Die Zubereitung der erfindungsgemäßen Zusammensetzungen für eine weitere Nutzung erfolgt durch Mischen der als Edukte einzusetzenden Komponenten a) und b), sowie gegebenenfalls der zusätzlichen Komponenten c) bis e) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den genannten Komponenten bestehen, oder aber zusätzlich zu den genannten Komponenten noch weitere Komponenten enthalten.

"Alkyl" bezeichnet im Rahmen der vorliegenden Erfindung, insbesondere in den Formeln (I) und (II), eine geradkettige oder verzweigte gesättigte Kohlenwasserstoffgruppe. Wird beispielsweise eine Alkylgruppe mit 1 bis 4 Kohlenstoffatomen eingesetzt, kann diese als eine "Niederalkylgruppe" bezeichnet werden und vorzugsweise Methyl (Me), Ethyl (Et), Propyl, insbesondere n-Propyl und iso-Propyl, Butyl, insbesondere n-Butyl, iso-Butyl, sec-Butyl, tert.-Butyl, umfassen.

"Cycloalkyl" leitet sich von Cycloalkanen ab, die eine Stoffgruppe von ringförmigen, gesättigten Kohlenwasserstoffen darstellen. Die Ringe können Seitenketten tragen. In der Systematik der organischen Chemie zählt man sie zu den alicyclischen Verbindungen. Die Cycloalkane ohne Seitenketten bilden eine homologe Reihe mit der allgemeinen Summenformel $C_nH_{2n}$, wobei n ≥ 3 ist. Somit ist das kleinste vorkommende Cycloalkan das Cyclopropan. Entsprechend lautet die Summenformel für einen unsubstituierten Cycloalkylrest ohne Seitenkette $C_nH_{2n-1}$.

Zur Klarstellung sei angemerkt, dass vom Rahmen dieser Erfindung alle aufgeführten, allgemeinen oder in Vorzugsbereichen genannten Definitionen und Parameter in beliebigen Kombinationen umfasst sind. Sofern nicht anders angegeben, gelten zitierte Normen in der zum Anmeldetag gültigen Fassung. Sofern nicht anders angegeben handelt es sich bei Prozentangaben um Gewichtsprozente. Erfindungsgemäß einzusetzende Polyamide, insbesondere Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96%iger Schwefelsäure von kleiner 135 ml/g, sind im Rahmen der vorliegenden Erfindung sogenannte niedrigviskose Polyamide.

## Bevorzugte Ausführungsformen der Erfindung

### Komponente a)

Erfindungsgemäß einzusetzende Polyamid, vorzugsweise Polyamid 6 und/oder Caprolactam-basierte Copolyamide und/oder Polyamid 66, weisen eine Lösungsviskosität gemessen bei 25°C nach ISO 307 in einer 0,5 gew.-%igen Lösung in 96%-iger Schwefelsäure von <135 ml/g auf. Für die Viskositätsmessung von Polyamid in Schwefelsäure wird ein Ubbelohde-Viskosimeter nach DIN 51 562, Teil 1 mit der Kapillare II verwendet. Die Messungen werden bei 25 °C (± 0,02 °C) durchgeführt. Siehe: **Viskositätsmessung von Polyamid, Ein Leitfaden, SI Analytics GmbH, Mainz, 2012,**

Xylem Inc.

Bevorzugt wird als Komponente a) ein niedrigviskoses Polyamid mit einer Lösungsviskosität bestimmt in einer 0,5 gew.-%igen Lösung in 96 gew.-%iger Schwefelsäure bei 25°C gemäß ISO 307 im Bereich von 80 bis 135 ml/g, besonders bevorzugt im Bereich von 90 bis 130 ml/g, ganz besonders bevorzugt im Bereich von 90 bis 125 ml/g, insbesondere besonders bevorzugt im Bereich von 95 bis 115 ml/g.

Erfindungsgemäß einzusetzenden Polyamide sind vorzugsweise semikristalline Polyamide, die gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks, aufweisen.

Vorzugsweise weisen als Komponente a) einzusetzende Polyamide einen Schmelzpunkt von mindestens 180°C auf. Besonders bevorzugt sind Polyamid 6 (PA 6) oder Polyamid 66 (PA 66) oder ein Co-Polyamid von PA6 oder PA66. Insbesondere ganz besonders bevorzugt wird PA 6 eingesetzt.

Die im Rahmen der vorliegenden Anmeldung benutzte Kennzeichnung der Polyamide entspricht internationaler Norm bzw. DIN 7728, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA 6, so bedeutet dies, dass von einer $\alpha,\omega$-Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, 8. Auflage, 2012, Seiten 605 - 607, VDI-Verlag.

Die in den erfindungsgemäßen thermoplastischen Formmassen einzusetzenden Polyamide können nach verschiedenen Verfahren hergestellt werden und aus unterschiedlichen Bausteinen synthetisiert werden. Zur Herstellung von Polyamiden sind eine Vielzahl von Verfahrensweisen bekannt, wobei je nach gewünschtem Endprodukt unterschiedliche Monomerbausteine sowie verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung der erfindungsgemäß einzusetzenden Polyamide verlaufen meist über die Polykondensation in der Schmelze. Im Rahmen der vorliegenden Erfindung wird auch die hydrolytische Polymerisation von Lactamen als Polykondensation verstanden.

**Komponente b)**

Vorzugsweise wird als Komponente b) ein mit wenigstens einem Aminosilan oberflächenbehandeltes $\alpha$-Al$_2$O$_3$, eingesetzt.

Besonders bevorzugt wird für die Komponente b) Al$_2$O$_3$ [CAS 1344-28-1] mit einer nach ISO 13320 mittels Laserbeugung zu bestimmenden monomodalen, volumenmittleren Partikelgrößenverteilung eingesetzt. Die Auswertung der mittels Laserbeugung erhaltenen Daten erfolgt über ein volumenbezogenes Histogramm mit logarithmischer Abzisse. Dazu werden die Partikelgrößen in Größenklassen unterteilt. Jede Dekade wird über einen

Messbereich von 0.01 $\mu$m bis 10000 $\mu$m in 18 Größenklassen unterteilt. Somit entstehen 108 Größenklassen, deren Breite der Größenklasse y der Formel

$$y = 0{,}01 \cdot e^{\frac{\ln(10)\bullet x}{18}} - 0{,}01 \cdot e^{\frac{\ln(10)\bullet(x-1)}{18}}$$

entspricht, wobei x die fortlaufende Zahl der Größenklassen im Bereich von 1 bis 108 beschreibt.

Zur Definition des Begriffs "monomodal" sei verwiesen auf:

**https://de.wikipedia.org/wiki/Partikelgr%C3%B6%C3%9Fenverteilung**

Erfindungsgemäß liegt eine monomodale Partikelgrößenverteilung dann vor, wenn die Auftragung des Volumens der Aluminiumoxid-Partikelgrößen in [%] (= Y-Achse im Histogramm) gegen die Größenklasse in micrometer [$\mu$m] (= X-Achse im Histogramm) vorzugsweise nur ein Maximum in Form einer Gauß'schen Kurve bildet und gegebenenfalls auftretende weitere Maxima ein Volumen von 1% nicht überschreiten.

Ein im Rahmen der vorliegenden Erfindung eingesetztes Aluminiumoxidpulver mit einer nach ISO 13320 mittels Laserbeugung zu bestimmenden monomodalen, volumenmittleren Partikelgrößenverteilung ist CT 3000 SG der Fa. Almatis GmbH mit einem d50-Wert von 0,5 $\mu$m und einer BET-Oberfläche von 7,8 m$^2$/g.

**Fig. 1** zeigt ein Histogramm mit der durch Laserbeugung nach ISO 13320 ermittelten monomodalen Partikelgrößenverteilung eines weiteren im Rahmen der vorliegenden Erfindung eingesetzten oberflächenbehandelten Aluminiumoxids, wozu 3-Aminopropyltrimethoxysilan verwendet wurde. Genauso kann aber auch 3-Aminopropyltriethoxysilan verwendet werden. Im Histogramm der **Fig. 1** sind die Größenklassen in $\mu$m (X-Achse) gegen das Volumen in % aufgetragen. Der d10 liegt darin bei 0,582 $\mu$m, der d50 bei 1,95 $\mu$m und der d90 bei 4,79 $\mu$m. Monomodale Aluminiumoxide werden auch von Nabaltec AG, Schwandorf, unter dem Markennamen Nabalox$^®$ vertrieben.

Der Begriff der "Partikelgrößenverteilung" ist der Statistik entlehnt. Dort werden Häufigkeiten und Häufigkeitsverteilungen eines beliebigen Merkmals, z.B. Fertigungstoleranzen, betrachtet. Im Bereich der Partikeltechnologie und der Partikelmesstechnik bzw. der Dispersitätsanalyse wird als Merkmal der Äquivalentdurchmesser eines Partikels gewählt. Aus der allgemeinen Häufigkeitsverteilung der Statistik ergibt sich die Partikelgrößenverteilung, die häufig auch als Korngrößenverteilung bezeichnet wird. Die Dichteverteilung von Partikelgrößen zeigt zumeist die Form einer Gaußschen Glockenkurve. Weist die Dichteverteilung von Partikelgrößen lediglich ein Maximum auf, so spricht man von einer monomodalen Verteilung. Bei zwei Maxima ist die Verteilung bimodal. Der Abszissenwert des größten Maximums wird als Modalwert bezeichnet. Die Partikelgrößenverteilung wird mittels Laserbeugung nach ISO13320 ermittelt. Für die Messung wurden im Rahmen der vorliegenden Erfindung die optischen Stoffdaten für Aluminiumoxid verwendet und nach der Mie-Theorie ausgewertet; siehe hierzu:

**https://de.wikipedia.org/wiki/Laserbeugungs-Partikelgr%C3%B6%C3%9Fenanalyse.**

d10, d50 und d90 sind diejenigen Durchmesser bei denen 10%, 50% (Median) bzw. 90% der Partikel bezogen auf das Gesamtvolumen einen kleineren Durchmesser haben.

Bei dem im Rahmen der vorliegenden Erfindung vorzugsweise einzusetzendem technischen Aluminiumoxid liegt der Anteil an $\alpha$-$Al_2O_3$ bei mehr als 70%. Besonders bevorzugt handelt es sich um ein Aluminiumoxid mit einem Anteil an $\alpha$-$Al_2O_3$ von über 90%. Ganz besonders bevorzugt handelt es sich um ein Aluminiumoxid mit einem Anteil an $\alpha$-$Al_2O_3$ von über 95%. Erfindungsgemäß besonders bevorzugt ist $\alpha$-$Al_2O_3$ mit weniger als 5 Gew.-% Verunreinigungen, ganz besonders bevorzugt mit weniger als 1 Gew.-% Verunreinigungen.

Bevorzugt wird für Komponente b) ein oberflächenbehandeltes Aluminiumoxid in Pulverform eingesetzt. Bevorzugte Pulver weisen eine gemäß ISO13320 zu bestimmende volumenmittlere Partikelgröße d50 von maximal 100 $\mu$m, und eine volumenmittlere Partikelgröße d50 im Bereich von 0,1 bis 50 $\mu$m, bevorzugt eine volumenmittlere Partikelgröße d50 im Bereich von 0,5 bis 10 $\mu$m, besonders bevorzugt eine volumenmittlere Partikelgröße d50 im Bereich von 0,5 bis 5 $\mu$m auf.

Die nach ISO13320 zu bestimmende Partikelgröße d10 liegt für Komponente b) vorzugsweise im Bereich von 0.01 bis 20 $\mu$m, besonders bevorzugt im Bereich von 0.05 bis 10 $\mu$m, ganz besonders bevorzugt im Bereich von 0.1 bis 5 $\mu$m und insbesondere bevorzugt im Bereich von 0.5 bis 2$\mu$m.

Die nach ISO13320 zu bestimmende Partikelgröße d90 liegt für Komponente b) vorzugsweise bei maximal 200$\mu$m, besonders bevorzugt im Bereich von 1 bis 100 $\mu$m, ganz besonders bevorzugt im Bereich von 1.5 bis 50 $\mu$m, insbesondere bevorzugt im Bereich von 2 bis 10 $\mu$m.

Erfindungsgemäß wird für die Komponente b) ein Aluminiumoxid mit einer nach ISO 13320 mittels Laserbeugung zu bestimmenden monomodalen, volumenmittleren Partikelgrößenverteilung mit einem d50 im Bereich von 0,1 bis 50 $\mu$m, einem d10 im Bereich von 0.01 bis 20 $\mu$m und einem d90 im Bereich von 1 bis 100 $\mu$m eingesetzt. Die Erfindung betrifft deshalb ganz besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem d50 im Bereich von 0.1 bis 50 $\mu$m, einem d10 im Bereich von 0.01 bis 20 $\mu$m und einem d90 im Bereich von 1 bis 100 $\mu$m eingesetzt wird.

Insbesondere ganz besonders bevorzugt wird für die Komponente b) ein Aluminiumoxid mit einer nach ISO 13320 mittels Laserbeugung zu bestimmenden monomodalen, volumenmittleren Partikelgrößenverteilung mit einem d50 im Bereich von 0.5 bis 5 $\mu$m, einem d10 im Bereich von 0.5 bis 2 $\mu$m und einem d90 im Bereich von 2 bis 10 $\mu$m eingesetzt. Die Erfindung betrifft deshalb insbesondere ganz besonders bevorzugt Zusammensetzungen und daraus herzustellende Formmassen und Erzeugnisse, mit der Maßgabe, dass als Komponente b) ein Aluminiumoxid mit einer nach ISO 13320 mittels Laserbeugung zu bestimmenden monomodalen volumenmittleren Partikelgrößenverteilung mit einem d50 im Bereich von 0.5 bis 5 $\mu$m, einem d10 im Bereich von 0.5 bis 2 $\mu$m und einem d90 im Bereich von 2 bis 10 $\mu$m eingesetzt wird.

Die erfindungsgemäß für die Komponente b) zu verwendenden $Al_2O_3$ Partikel, können in unterschiedlichen Formen vorliegen, die durch das Aspektverhältnis beschrieben werden können. Bevorzugt werden Partikel mit einem Aspektverhältnis von 1 bis 100, besonders bevorzugt 1 bis 30, ganz besonders bevorzugt 1 bis 10 eingesetzt. In EP 3 164 694 A1 werden einige Verfahren zur Bestimmung des Aspektverhältnisses beschrieben. Bei kamerabasierten Verfahren werden die Partikel als zweidimensionale Bilder auf dem Sensor der Kamera abgebildet. Ist der Sensor eine CCD-Matrix oder ein CMOS-Bildsensor wird eine entsprechende Bildauswertesoftware zur Partikelformbestimmung verwendet. In DE 198 02 141 C1 ist eine Lösung mit Matrixkamera und in EP 1 972 921 A1 ist eine Lösung mit zwei Kameras beschrieben. Ist der Sensor eine CCD-Zeile, wird die abgebildete Partikelfläche aus den gemessenen Sehnenlängen bei bekannter Partikelgeschwindigkeit zusammengesetzt. Entsprechende Vorrichtungen und Verfahren sind in DE 10 2009 056 503 A1 (mit Sensorzeile), DE 10 2004 056 520 A1 (mit CCD-Zeile), DE 43 13 688 A1 (mit CCD- Zeile), DE 41 19 240 C2 (mit CCD-Zeile), DD 278 859 A1 (mit CCD-Liniensensor), DD 260 764 A1 (mit CCD-Zeilensensor) und DD 232760 A1 (mit einzeiliger Fernsehkamera) aufgeführt. DE 196 28 348 C1 schlägt eine Bestimmung der Partikelform mit einer Zeile aus einzelnen Lichtwellenleitern vor, wobei eine zweite Lichtwellenleiterzeile zur Ermittlung der Geschwindigkeit eingesetzt wird. Beugungsbasierte Verfahren nutzen die Abhängigkeit des Partikelbeugungsbildes von der Partikelform. Dabei werden die Partikel mit kohärentem Licht bestrahlt und die Lichtintensitätsverteilung des Beugungsbildes mit einem geeigneten Empfänger gemessen. Die Verteilung der Lichtintensität im Beugungsbild hängt von der Form der Partikel ab.

Lösungen hierfür enthalten DE 694 06 683 T2 (mit Ringsensor) und DE 102 18 413 B4. Die Druckschrift DE 41 29 105 A1 offenbart eine Bestimmung der Partikelform mit Hilfe einer Streulichtmessung. Da sich die genannten Verfahren lediglich vom Aufwand her unterscheiden, kann der Fachmann aus diesen im Stand der Technik genannten Verfahren frei wählen.

Erfindungsgemäß für die Komponente b) einzusetzendes $Al_2O_3$ ist mit wenigstens einer Oberflächenmodifizierung auf Basis wenigstens eines Aminosilans versehen. Als Oberflächenmodifizierung werden silanbasierte organische Kopplungsmittel bezeichnet, welche die Anbindung an die thermoplastische Matrix verbessern sollen.

Bevorzugte Oberflächenbehandlungsmittel bzw. Oberflächenmodifizierungen sind Aminosilane mit der allgemeinen Summenformel

$$(RO)_3\text{-Si-}(CH_2)_n\text{-X}$$

worin

| | |
|---|---|
| R | für einen organischen Rest ausgewählt aus der Gruppe Methyl, Ethyl, i-Propyl und Methoxymethyl steht, |
| n | für eine ganze Zahl von 0 bis 12 - Endwerte eingeschlossen - steht, und |
| X | für einen Rest $NR^1R^2$ steht und |
| $R^1$ und $R^2$ | jeweils unabhängig voneinander für Wasserstoff, für einen $C_1$-$C_6$-Alkylrest oder für einen $C_6$-$C_9$-Cycloalkylrest stehen. |

Bevorzugt wird für die Oberflächenbehandlung bzw. Oberflächenmodifizierung des Aluminiumoxids wenigstens ein Aminosilan ausgewählt aus der Gruppe 3-Aminopropyltriethoxysilan [CAS 919-30-2], 3-Aminopropyltrimethoxysilan [CAS 13822-56-5], N-(2-aminoethyl)-3-aminopropyltrimethoxysilan [CAS 1760-24-3], N-(2-aminoethyl)-3-aminopropyltriethoxysilan [CAS 5089-72-5], 3-(N-cyclohexylamino)propyltrimethoxysilan [CAS 3068-78-8], und N,N-(Diethylaminomethyl)triethoxysilan [CAS 15180-47-9] eingesetzt.

Erfindungsgemäß Silan basierte Oberflächenmodifizierungen und deren Herstellung sind dem Fachmann prinzipiell aus US 7,547,743 B2 bekannt, deren Inhalt bezüglich der darin offenbarten Herstellung von Organopolysiloxanen von der vorliegenden Anmeldung vollumfänglich umfasst wird.

Vorzugsweise wird das für die Oberflächenmodifizierung einzusetzende Aminosilan in Mengen im Bereich von 0.05 bis 5 Massenanteilen, besonders bevorzugt in Mengen im Bereich von 0.1 bis 1 Massenanteilen, bezogen auf 100 Massenanteile Aluminiumoxid, aufgetragen.

Die Oberflächenbehandlung bzw. Oberflächenmodifizierung des Aluminiumoxids mit Aminosilan kann unmittelbar vor dem Einsatz des Aluminiumoxids erfolgen, oder es kann bereits zuvor oberflächenbehandeltes Aluminiumoxid eingesetzt werden. Die oben genannten Aminosilane reagieren beim Kontakt mit dem Aluminiumoxid zu Silanolen, der jeweilige Alkoholrest wird abgespalten. Das im Zusammenhang mit Fig.1 diskutierte 3-Aminopropyltrimethoxysilan oder 3-Aminopropyltriethoxysilan, beide werden bei Kontakt mit dem Aluminiumoxid zu 3-Aminopropylsilanol umgewandelt, der Alkoholrest wird abgespalten.

Der Auftrag des Aminosilans auf das Aluminiumoxid kann erfindungsgemäß in der in WO 2009/156342 A1 beschriebenen Weise erfolgen, indem zunächst das Aminosilan zur Silanolbildung in VE-Wasser (VE = vollentsalztes Wasser) vorgelegt und bei einer Temperatur im Bereich von 23 bis 27 °C (Zimmertemperatur) gerührt wird. Die Einsatzmengen orientieren sich an den oben genannten Massenanteilen. Anschließend gibt man das Aluminiumoxid hinzu, rührt die Suspension bei Temperaturen im Bereich von 75 bis 100 °C, saugt das oberflächenbehandelte Aluminiumoxid ab und wäscht mit VE-Wasser. Anschließend wird bei Temperaturen von etwa 120 °C getrocknet und bei 200 °C getempert. Eine technische Methode zur Oberflächenbehandlung von Aluminiumoxid mit Silanen wird in EP 1 628 916 B1 beschrieben, deren Inhalt von der vorliegenden Anmeldung vollumfänglich umfasst wird. Dabei wird pyrogen hergestelltes Aluminiumoxid bei Raumtemperatur mit dem Oberflächenmodifizierungsmittel besprüht und das Gemisch anschließend thermisch bei einer Temperatur von 50 bis 400 °C über einen Zeitraum von 1 bis 6 Stunden behandelt, oder das pyrogene Aluminiumoxid mit dem Oberflächenmodifizierungsmittel in Dampfform behandelt und die Mischung anschließend thermisch bei einer Temperatur im Bereich von 50 bis 800 °C und über einen Zeitraum von 0,5 bis 6 h ausgesetzt, wobei die thermische Behandlung unter Schutzgas, wie zum Beispiel Stickstoff, erfolgen kann. Die Oberflächenbehandlung gemäß EP 1 628 916 B1 kann in beheizbaren Mischern und Trocknern mit Sprühvorrichtungen kontinuierlich oder diskontinuierlich durchgeführt werden. Geeignete Vorrichtungen sind beispielsweise Pflugscharmischer oder Platten-, Zyklon- oder Wirbelschichttrockner.

**Komponente c)**

Bei dem im Rahmen der vorliegenden Erfindung in den Zusammensetzungen einzusetzenden Thermostabilisator handelt es sich um Thermostabilisatoren ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole und der Kupferhalogenide. In einer Ausführungsform werden auch verschieden substituierte Vertreter aller vorgenannten Thermostabilisatoren und deren Mischungen eingesetzt.

Die Kupferhalogenide werden vorzugsweise in Kombination mit Alkali- und/oder Erdalkalimetallhalogeniden eingesetzt. Bevorzugtes Kupferhalogenid ist Kupferiodid. Bevorzugte Alkalihalogenide sind Kaliumiodid, Kaliumbromid oder Natriumchlorid. Bevorzugtes Erdalkalihalogenid ist Calciumchlorid. In einer Ausführungsform wird das Kupferhalogenid in Kombination mit Manganchlorid eingesetzt.

Bevorzugt werden als polyhydrischer Alkohol Tripentaerythritol oder Dipentaerythritol, insbesondere Dipentaerythritol, eingesetzt.

Besonders bevorzugt wird als Thermostabilisator wenigstens eine Verbindung aus der Reihe der sterisch gehinderten Phenole, der sterisch gehinderten Phosphite, der polyhydrischen Alkohole, oder der Kupferhalogenide eingesetzt.

Ganz besonders bevorzugt werden als Thermostabilisatoren sterisch gehinderte Phenole und/oder Phosphite, insbesondere besonders bevorzugt sterisch gehinderte Phenole eingesetzt. Insbesondere ganz besonders bevorzugt wird als Thermostabilisator der Komponente c) das sterisch gehinderte Phenol N,N'-Hexamethylen-bis[3-(3,5-di-t-butyl-4-hydroxyphenyl)propionamid [CAS 23128-74-7] eingesetzt, das als Ultranox® 1098 von der BASF SE, Ludwigshafen angeboten wird.

Erfindungsgemäß bevorzugt sind Zusammensetzungen, daraus herzustellende Formmassen und darauf basierende Erzeugnisse enthaltend auf

a) 100 Massenanteile wenigstens eines Polyamids, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.%-ige Lösung 96%iger Schwefelsäure von kleiner 135 ml/g,

b) 125 bis 600 Massenanteile mit wenigstens einem Aminosilan oberflächenbehandeltes $Al_2O_3$ mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten, und

c) 0.13 bis 12.5 Massenanteile N,N'-Hexamethylen-bis[3-(3,5-di-t-butyl-4-hydroxyphenyl)propionamid.

Die Erfindung betrifft besonders bevorzugt ein Verfahren zur Reduzierung der Abrasivität wärmeleitfähiger und gleichzeitig thermostabilisierter Polyamidzusammensetzungen, dadurch gekennzeichnet, dass das einzusetzende $Al_2O_3$, dessen Oberfläche mit wenigstens einem Aminosilan oberflächenbehandelt ist, mit einer Polyamidzusammensetzung in Kontakt gebracht wird, die wenigstens einen Thermostabilisator aus der Gruppe der sterisch gehinderten Phenole und/oder Phosphite, insbesondere besonders bevorzugt der sterisch gehinderten Phenole und insbesondere ganz besonders bevorzugt mit N,N'-Hexamethylen-bis[3-(3,5-di-t-butyl-4-hydroxyphenyl)propionamid enthält.

Die Erfindung betrifft zudem die Verwendung von mit wenigstens einem Aminosilan oberflächenbehandeltem $Al_2O_3$ zur Reduzierung der Abrasion in Verarbeitungsmaschinen für die Verarbeitung von Polyamidzusammensetzungen, und das Aluminiumoxid in Kombination mit wenigstens einem Thermostabilisator aus der Gruppe der sterisch gehinderten Phenole und/oder Phosphite, insbesondere besonders bevorzugt der sterisch gehinderten Phenole und insbesondere ganz besonders bevorzugt mit N,N'-Hexamethylen-bis[3-(3,5-di-t-butyl-4-hydroxyphenyl)propionamid eingesetzt wird.

**Komponente d)**

In einer Ausführungsform werden als Komponente d) wenigstens ein Entformungsmittel oder wenigstens ein Nukleierungsmittel eingesetzt.

Erfindungsgemäß als Komponente d) bevorzugt einzusetzende Nukleierungsmittel sind vorzugsweise Natrium- oder Calciumphenylphosphinat oder Siliziumdioxid oder Talkum, besonders bevorzugt Talkum. Talkum ist ein Magnesiumsilikathydrat mit der chemischen Zusammensetzung $Mg_3[Si_4O_{10}(OH)_2]$.

Erfindungsgemäß als Komponente d) bevorzugt einzusetzende Entformungsmittel sind vorzugsweise langkettige Fettsäuren, deren Salze, sowie deren Esterderivate oder Amidderivate, Montanwachsester und deren Salze sowie niedermolekulare Polyethylen- bzw. Polypropylenwachse in oxidierter und nicht-oxidierter Form.

Bevorzugte Fettsäure ist Stearinsäure. Bevorzugte Salze der Fettsäuren sind Calciustearat oder Zinkstearat.

Bevorzute Esterderivate der Fettsäuren sind Stearylstearat oder Glycerintristearat. Bevorzugte Montanwachsester sind Ester von Montansäuren mit multifunktionellen Alkoholen, insbesondere mit Ethylenglykol.

Erfindungsgemäß bevorzugte Gleit- und/oder Entformungsmittel sind ferner die Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen.

In einer weiteren bevorzugten Ausführungsform enthalten die erfindungsgemäßen Formmassen Mischungen der oben genannten Gleit- und/oder Entformungsmittel. Die insbesondere bevorzugt einzusetzenden Montanwachsester und deren Salze verbessern die Fließfähigkeit von Kunststoffen wie Polyamiden allein durch innere Gleitwirkung, ohne das Molekulargewicht des Polymers zu reduzieren.

Insbesondere ganz besonders bevorzugt werden Ester der Montansäure mit multifunktionellen Alkoholen eingesetzt, die von der Clariant GmbH, als Licowax® E (CAS No: 73138-45-1) angeboten werden.

In einer Ausführungsform betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.%-ige Lösung in 96%iger Schwefelsäure von kleiner 135 ml/g,

b) 125 bis 600 Massenanteile mit wenigstens einem Aminosilan oberflächenbehandeltes $Al_2O_3$ mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole oder der Kupferhalogenide,

d) 0.001 bis 10 Massenanteile wenigstens eines Esters der Montansäure mit multifunktionellen Alkoholen und/oder Talkum.

Erfindungsgemäß bevorzugt sind Zusammensetzungen, daraus herzustellende Formmassen und darauf basierende Erzeugnisse enthaltend auf

a) 100 Massenanteile wenigstens eines Polyamids, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.%-ige Lösung in 96%iger Schwefelsäure von kleiner 135 ml/g,

b) 125 bis 600 Massenanteile mit wenigstens einem Aminosilan oberflächenbehandeltes $Al_2O_3$ mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten, und

c) 0.13 bis 12.5 Massenanteile N,N'-Hexamethylen-bis[3-(3,5-di-t-butyl-4-hydroxyphenyl)propionamid, und

d) 0.001 bis 10 Massenanteile wenigstens eines Esters der Montansäure mit multifunktionellen Alkoholen und/oder Talkum.

In einer Ausführungsform betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basiert Copolyamide und/oder Polyamid 66, mit einer Lösungsviskosität gemessen bei 25°C nach ISO 307 in einer 0,5 gew.%-ige Lösung in 96%iger Schwefelsäure von kleiner 135 ml/g,

b) 125 bis 600 Massenanteile mit wenigstens einem Aminosilan oberflächenbehandeltes $Al_2O_3$ mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole oder der Kupferhalogenide,

d) 0.001 bis 10 Massenanteile wenigstens eines Esters der Montansäure mit multifunktionellen Alkoholen und/oder Talkum, und

e) 0.001 bis 150 Massenanteile wenigstens eines weiteren von den Komponenten b), c) und d) verschiedenen Additivs eingesetzt werden.

Erfindungsgemäß bevorzugt sind Zusammensetzungen, daraus herzustellende Formmassen und darauf basierende Erzeugnisse enthaltend auf

a) 100 Massenanteile wenigstens eines Polyamids, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.%-ige Lösung in 96%iger Schwefelsäure von kleiner 135 ml/g,

b) 125 bis 600 Massenanteile mit wenigstens einem Aminosilan oberflächenbehandeltes $Al_2O_3$ mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten, und

c) 0.13 bis 12.5 Massenanteile N,N'-Hexamethylen-bis[3-(3,5-di-t-butyl-4-hydroxyphenyl)propionamid, und

d) 0.001 bis 10 Massenanteile wenigstens eines Esters der Montansäure mit multifunktionellen Alkoholen und/oder Talkum.

In einer Ausführungsform betrifft die vorliegende Erfindung Zusammensetzungen und daraus herzustellende Formmassen und darauf basierende Erzeugnisse, worin auf

a) 100 Massenanteile Polyamid, vorzugsweise Polyamid 6 und/oder Caprolactam-basierte Copolyamide und/oder Polyamid 66, mit einer Lösungsviskosität gemessen nach ISO 307 in einer 0,5 gew.%-ige Lösung in 96%iger Schwefelsäure von kleiner 135 ml/g .

b) 125 bis 600 Massenanteile mit wenigstens einem Aminosilan oberflächenbehandeltes $Al_2O_3$ mit einer nach ISO 13320 mittels Laserbeugung zu bestimmende, monomodale, volumenmittlere Partikelgrößenverteilung und eine volumenmittlere Partikelgröße d50 im Bereich von 0,1 bis 50 $\mu$m, wobei eine monomodale Partikelgrößenverteilung vorliegt wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramm nur ein Maximum in Form einer Gauß'schen Kurve bildet und gegebenenfalls auftretende weitere Maxima ein Volumen von 1% nicht überschreiten,

c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, der Hydrochinone, der aromatischen sekundären Amine, der substituierten Resorcine, der Salicylate, der Benzotriazole, der Benzophenone, der polyhydrischen Alkohole oder der Kupferhalogenide,

d) 0.001 bis 10 Massenanteile wenigstens eines Esters der Montansäure mit multifunktionellen Alkoholen und/oder Talkum, und

e) 0.001 bis 150 Massenanteile wenigstens eines weiteren von den Komponenten b), c) und d) verschiedenen Additivs eingesetzt werden.

In einer Ausführungsform kann auf Komponente d) verzichtet werden. In diesem Fall enthält eine Zusammensetzung, Formmasse oder Erzeugnis die Komponenten a), b), c) und e).

**Komponente e)**

Gegebenenfalls als Komponente e) einzusetzende weitere Additive sind von den Komponenten b), c) und d) verschiedene Substanzen aus der Gruppe der UV-Stabilisatoren, Gammastrahlenstabilisatoren, Hydrolysestabilisatoren, Antistatika, Emulgatoren, Weichmacher, Wärmeletfähigkeitsadditive, Verarbeitungshilfsmittel, Schlagzähmodifikatoren oder Elastomermodifikatoren, Füll- und Verstärkungsstoffe, Gleitmittel, Flammschutzmittel, Farbstoffe oder Pigmente. Die genannten und weitere geeignete Additive sind Stand der Technik und können vom Fachmann beispielsweise im Plastics Additives Handbook, 5th Edition, Hanser-Verlag, München, 2001, Seiten 80-84, 546-547, 688, 872-874, **938, 966** aufgefunden werden. Die als Komponente e) einzusetzenden Zusatzstoffe können alleine oder in Mischung bzw. in Form von Masterbatchen eingesetzt werden.

Erfindungsgemäß bevorzugt als Komponente e) einzusetzende UV-Stabilisatoren sind vorzugsweise substituierte Resorcine, Salicylate, Benzotriazole oder Benzophenone.

Erfindungsgemäß als Komponente e) einzusetzende Schlagzähmodifikatoren oder Elastomermodifikatoren sind vorzugsweise Copolymerisate, die bevorzugt aus mindestens zwei Monomeren aus der Gruppe Ethylen, Propylen, Butadien, Isobuten, Isopren, Chloropren, Vinylacetat, Styrol, Acrylnitril und Acrylsäureester oder Methacrylsäureester mit 1 bis 18 C-Atomen in der Alkoholkomponente aufgebaut sind. Die Copolymerisate können kompatibilisierende Gruppen, bevorzugt Maleinsäureanhydrid oder Epoxid enthalten.

Erfindungsgemäß als Komponente e) einzusetzende Farbstoffe oder Pigmente sind vorzugsweise anorganische Pigmente, besonders bevorzugt Titandioxid, Ultramarinblau, Eisenoxid, Zinksulfid oder Russ, sowie organische Pigmente, besonders bevorzugt Phthalocyanine, Chinacridone, Perylene sowie Farbstoffe, besonders bevorzugt Nigrosin oder Anthrachinone als Farbmittel sowie andere Farbmittel. Insbesondere bevorzugt werden Ruß und/oder Nigrosin eingesetzt.

Erfindungsgemäß als Komponente e) einzusetzende Füll- und Verstärkungsstoffe sind vorzugsweise faserförmige, nadelförmige oder teilchenförmige Füll- und Verstärkungsstoffe verschieden von Aluminiumoxid. Besonders bevorzugt sind Kohlenstofffasern, Glaskugeln, amorphe Kieselsäure, Calciumsilicat, Calciummetasilicat, Magnesiumcarbonat, Kaolin, calciniertes Kaolin, Kreide, gepulverter Quarz, Glimmer, Phlogopit, Bariumsulfat, Feldspat, Wollastonit, Kyanit bzw. Aluminiumsilikat, Montmorillonit, Magnesiumoxid, Zinkoxid, Bornitrid, Graphit, Carbon Nanotubes, Graphen, Eisenoxide, Ferrite, Magnetit, Kupfer, Aluminium, Titandioxid, oder Glasfasern, ganz besonders bevorzugt Glasfasern, insbesondere bevorzugt Glasfasern aus E-Glas. Die faserförmigen oder teilchenförmigen Verstärkungsstoffe sind in einer bevorzugten Ausführungsform zur besseren Verträglichkeit mit Thermoplasten mit geeigneten Oberflächenmodifizierungen, insbesondere Oberflächenmodifizierungen enthaltend Silanverbindungen versehen.

Erfindungsgemäß als Komponente e) einzusetzende Wärmeleitfähigkeitsadditive sind vorzugsweise auszuwählen aus der Gruppe Aluminiumsilikat, insbesondere Kyanit, Montmorillonit, Magnesiumoxid, Zinkoxid, Bornitrid, Graphit, Carbon Nanotubes, Graphen, Eisenoxide, Ferrite, Magnetit, Kupfer, Aluminium und Titandioxid.

Erfindungsgemäß als Komponente e) einzusetzende Flammschutzmittel sind vorzugsweise mineralische Flammschutzmittel, stickstoffhaltige Flammschutzmittel oder phosphorhaltige Flammschutzmittel.

Bevorzugte stickstoffhaltige Flammschutzmittel sind die Reaktionsprodukte aus Trichlortriazin, Piperazin und Morpholin [CAS 1078142-02-5], insbesondere MCA PPM Triazin HF der Fa. MCA Technologies GmbH, Biel-Benken, Schweiz, ferner Melamincyanurat und Kondensationsprodukte des Melamins wie z.B. Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer und aromatischer Sulfonsäuren und mineralische Flammschutzadditive wie Aluminiumhydroxid, Ca-Mg-Carbonat-Hydrate (z.B. DE-A 4 236 122**)** als Flammschutzmittel der Komponente e) eingesetzt werden.

In Frage kommen für Komponente e) ferner Flammschutzmittelsynergisten aus der Gruppe der sauerstoff- stickstoff- oder schwefelhaltigen Metallverbindungen, wobei zinkfreie Verbindungen insbesondere Molybdänoxid, Magnesiumoxid, Magnesiumcarbonat, Calciumcarbonat, Calciumoxid, Titannitrid, Magnesiumnitrid, Calciumphosphat, Calciumborat, Magnesiumborat oder deren Mischungen besonders bevorzugt sind.

In einer alternativen Ausführungsform können als Komponente e) aber auch - sofern es der Bedarf erfordert - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

Bevorzugte als Komponente e) einzusetzende phosphorhaltige Flammschutzmittel sind organische Metallphosphinate, insbesondere Aluminium-tris(diethylphosphinat), Aluminiumsalze der Phosphonsäure, roter Phosphor, anorganische Metallhypophosphite, insbesondere Aluminiumhypophosphit, weitere Metallphosphonate insbesondere Calciumphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Melaminpyrophosphat und Melaminpolyphosphat, ferner Melamin-poly(aluminiumphosphat), Melamin-poly(zinkphosphat) oder Phenoxyphosphazenoligomere und deren Mischungen.

Weitere als Komponente e) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die als Komponente e) einzusetzenden Flammschutzmittel können in Reinform, sowie über Masterbatche oder Kompaktate zugesetzt werden.

In einer alternativen Ausführungsform können als Komponente e) einzusetzende Flammschutzmittel aber auch - sofern der Bedarf es erfordert unter Berücksichtigung der Nachteile durch den Verlust der Halogenfreiheit der Flammschutzmittel - halogenhaltige Flammschutzmittel eingesetzt werden. Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können, wobei unter den halogenhaltigen Flammschutzmitteln bromiertes Polystyrol besonders bevorzugt ist. Bromiertes Polystyrol ist in diversen Produktqualitäten kommerziell verfügbar. Beispiele hierfür sind z.B. Firemaster® PBS64 der Fa. Lanxess, Köln, Deutschland sowie Saytex® HP-3010 der Fa. Albemarle, Baton Rouge, USA.

Unter den als Komponente e) einzusetzenden Flammschutzmitteln sind Aluminium-tris(diethylphosphinat)] [CAS 225789-38-8] sowie die Kombination aus Aluminium-tris(diethylphosphinat) und Melaminpolyphosphat oder die Kombination aus Aluminium-tris(diethylphosphinat) und mindestens einem Aluminiumsalz der Phosphonsäure ganz besonders bevorzugt, wobei letztere Kombination insbesondere bevorzugt ist.

Als geeignetes Aluminium-tris(diethylphosphinat) kommt z.B. das Exolit® OP1230 oder Exolit® OP1240 der Fa. Clariant International Ltd. Muttenz, Schweiz in Frage. Melaminpolyphosphat ist in diversen Produktqualitäten kommerziell verfügbar. Beispiele hierfür sind z.B. Melapur® 200/70 der Fa. BASF, Ludwigshafen, Deutschland sowie Budit® 3141 der Fa. Budenheim, Budenheim, Deutschland.

Bevorzugte Aluminiumsalze der Phosphonsäure sind ausgewählt aus der Gruppe

primäres Aluminiumphosphonat $[Al(H_2PO_3)_3]$,

basisches Aluminiumphosphonat $[Al(OH)H_2PO_3)_2 \cdot 2H_2O]$,

$Al_2(HPO_3)_3 \cdot x \; Al_2O_3 \cdot n \; H_2O$ mit x im Bereich von 2,27 bis 1 und n im Bereich von 0 bis 4,

$$Al_2(HPO_3)_3 \cdot (H_2O)_q \qquad (Z1)$$

mit q im Bereich von 0 bis 4, insbesondere Aluminiumphosphonattetrahydrat $[Al_2(HPO_3)_3 \cdot 4H_2O]$ oder sekundäres Aluminiumphosphonat $[Al_2(HPO_3)_3]$,

$$Al_2M_z(HPO_3)_y(OH)_v \cdot (H_2O)_w \qquad (Z2)$$

worin M für wenigstens ein Alkalimetallion steht und z im Bereich von 0,01 bis 1,5, y im Bereich von 2,63 - 3,5, v im Bereich von 0 bis 2 und w im Bereich von 0 bis 4 liegt, und

$$Al_2(HPO_3)_u(H_2PO_3)_t \cdot (H_2O)_s \qquad (Z3)$$

worin u im Bereich von 2 bis 2,99, t im Bereich von 2 bis 0,01 und s im Bereich von 0 bis 4 liegt,

wobei in Formel (Z2) z, y und v sowie in Formel (Z3) u und t nur solche Zahlen annehmen können, dass das entsprechende Aluminiumsalz der Phosphonsäure als Ganzes ungeladen ist. Bevorzugte Alkalimetalle in Formel (Z2) sind Natrium und Kalium. Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \cdot x\ Al_2O_3 \cdot n\ H_2O$ mit x im Bereich von 2,27 bis 1 und n im Bereich von 0 bis 4.

Ganz besonders bevorzugt sind sekundäres Aluminiumphosphonat $[Al_2(HPO_3)_3$, [CAS 71449-76-8] und sekundäres Aluminiumphosphonattetrahydrat $[Al_2(HPO_3)_3 \cdot 4H_2O$, [CAS 156024-71-4], insbesondere bevorzugt ist sekundäres Aluminiumphosphonat $[Al_2(HPO_3)_3]$.

Die Herstellung der als Flammschutzmittel der Komponente e) einzusetzenden Aluminiumsalze der Phosphonsäure ist zum Beispiel in WO 2013/083247 A1 beschrieben.

Ferner ist Gegenstand der vorliegenden Erfindung ein Verfahren zur Herstellung erfindungsgemäßer Formmassen, wobei man die Komponenten a) bis c) sowie gegebenenfalls d) und gegebenenfalls e) in entsprechenden Massenanteilen in wenigstens einem Mischaggregat mischt oder vermengt. Vorzugsweise werden dabei die einzusetzenden Komponenten zu einer Formmasse geknetet, compoundiert, extrudiert oder gewalzt. Bevorzugt erfolgt dies bei einer Temperatur im Bereich von 230 bis 400°C, besonders bevorzugt durch Compoundieren auf einem gleichläufigen Zweiwellenextruder oder Buss-Kneter. Es kann vorteilhaft sein, einzelne Komponenten vorzumischen.

Gegenstand der vorliegenden Anmeldung ist auch die Verwendung bzw. Verarbeitung der aus den erfindungsgemäß einzusetzenden Komponenten herzustellenden Formmassen im Extrusionsprozess, in Blasformverfahren oder im Spritzguss zur Herstellung von Erzeugnissen, bevorzugt von Formteilen oder Halbzeugen, insbesondere mittels Spritzguss.

Erfindungsgemäße Verfahren zur Herstellung von Erzeugnissen mittels Extrusion, Blasformen oder Spritzguss werden bei Schmelzetemperaturen im Bereich von 230 bis 330°C, bevorzugt von 250 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar durchgeführt.

Bei der Extrusion, auch als Strangpressen bezeichnet, werden feste bis dickflüssige härtbare thermoplastische Formmassen unter Druck kontinuierlich aus einer formgebenden Öffnung, vorzugsweise als Düse, Matrize oder Mundstück bezeichnet, herausgepresst. Dabei entstehen Erzeugnisse mit dem Querschnitt der Öffnung in theoretisch beliebiger Länge (http://de.wikipedia.org/wiki/Extrusion_(Verfahrenstechnik). Die grundsätzlichen Verfahrensschritte des Profil-Extrusionsverfahrens, einer Verfahrensform der Extrusion, sind:

1. Plastifizieren und Bereitstellen der thermoplastischen Schmelze in einem Extruder,

2. Extrusion des thermoplastischen Schmelzestrangs durch eine Kalibrierhülse, die den Querschnitt des zu extrudierenden Profils aufweist,

3. Abkühlung des extrudierten Profils in einem Kalibriertisch,

4. Weitertransport des Profils mit einem Abzug hinter dem Kalibriertisch,

5. Ablängen des zuvor endlosen Profils in einer Schneideanlage,

6. Sammeln der abgelängten Profile an einem Sammeltisch.

Eine Beschreibung der Profilextrusion von Polyamid 6 und Polyamid 66 erfolgt in Kunststoff-Handbuch 3/4, Polyamide, Carl Hanser Verlag, München 1998, Seite 374-384.

Das Verfahren des Blasformens ist beispielsweise in **http://www.blasformen.com/** beschrieben. Beim Blasformen wird im ersten Verfahrensschritt mittels eines beheizten Extruders Kunststoffgranulat eingezogen, verdichtet, entgast, aufgeheizt, plastifiziert und zu einem plastischen Kunststoffstrang homogenisiert. Im nächsten Schritt wird die Kunststoffmasse in einen an den Extruder angeflanschten Schlauchkopf geführt. Dort wird die Kunststoffschmelze zu einem Schlauch geformt, der senkrecht aus einer Düse nach unten austritt. Der Schlauchdurchmesser wird mit unterschiedlich großen Dorn- und Düsennormalien, die an den Schlauchkopf angeflanscht werden, an den zu fertigenden Artikel angepasst. Die Schlauchdicke und das daraus resultierende Gewicht der Blasformteile wird durch die Auswahl von unterschiedlichen Durchmesser-Differenzen von Dorn zu Düse vorbestimmt.

Der Spritzguss zeichnet sich dadurch aus, dass der Rohstoff, also die zu verarbeitende thermoplastische Formmasse enthaltend die erfindungsgemäß einzusetzenden Komponenten, bevorzugt in Granulatform, in einem beheizten zylindrischen Hohlraum aufgeschmolzen (plastifiziert) und als Spritzmasse unter Druck in einem temperierten Hohlraum gespritzt wird. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze der zu verarbeitenden und die erfindungsgemäß einzusetzenden Komponenten enthaltenden Formmasse gelöst, gekühlt und somit das zu fertigende Bauteil gefertigt. Notwendig dazu sind immer wenigstens zwei Werkzeughälften. Beim Spritzguss unterscheidet man folgende Funktionskomplexe:

- Angusssystem

- Formbildende Einsätze

- Entlüftung

- Maschinen- und Kraftaufnahme

- Entformungssystem und Bewegungsübertragung

- Temperierung

Im Gegensatz zum Spritzguss wird bei der Extrusion ein endlos geformter Strang aus der erfindungsgemäß einzusetzenden Formmasse im Extruder eingesetzt, wobei der Extruder eine Maschine zur Herstellung von Erzeugnissen auf Basis thermoplastischer Formstücke ist. Man unterscheidet Einschneckenextruder und Doppelschneckenextruder sowie die jeweiligen Untergruppen, konventioneller Einschneckenextruder, förderwirksamer Einschneckenextruder, gegenläufiger Doppelschneckenextruder und gleichläufiger Doppelschneckenextruder.

Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, bevorzugt Formteile, Formkörper oder Halbzeuge, erhältlich durch Extrusion oder Spritzguss der erfindungsgemäßen, wenigstens die Komponenten a), b) und c) sowie gegebenenfalls d) und gegebenenfalls e) enthaltenden Formmassen.

Die vorliegende Erfindung betrifft die Verwendung der durch Extrusion oder Spritzguss aus Formmassen, enthaltend wenigstens die Komponenten a), b) und c) sowie ggf. d) und ggf. e) hergestellten elektrisch isolierenden aber thermisch leitenden Erzeugnisse, bevorzugt Formteile, Formkörper oder Halbzeuge, für elektrische oder elektronische Bauteile. Diese erfindungsgemäßen Erzeugnisse können bevorzugt in der Kraftfahrzeug-, Elektro-, Elektronik-, Telekommunikations-, Solar-, Informationstechnologie-, Computer- Industrie, im Haushalt, Sport, in der Medizin oder in der Unterhaltungsindustrie angewandt werden. Insbesondere können erfindungsgemäße Erzeugnisse für Anwendungen eingesetzt werden, bei denen eine verbesserte Wärmeleitung und gute mechanische Eigenschaften notwendig sind. Bevorzugt für derartige Anwendungen ist die Verwendung für Formteile in der Elektrotechnik und in Fahrzeugen, insbesondere Bauteile in Kraftfahrzeugen (KFZ).

Die vorliegende Erfindung betrifft deshalb auch die Verwendung der erfindungsgemäßen thermoplastischen Formmassen zur Herstellung von Formteilen und Halbzeugen und wiederum daraus herzustellender Erzeugnisse, bevorzugt von Formteilen für Kraftfahrzeuge.

**Beispiele:**

Die einzelnen Komponenten a), b), c) und gegebenenfalls d) und gegebenenfalls e) wurden in einem Zweiwellenextruder des Typs ZSK 26 Compounder der Firma Coperion Werner & Pfleiderer (Stuttgart, Deutschland) bei einer Temperatur von ca. 280°C gemischt, als Strang in ein Wasserbad ausgetragen, bis zur Granulierfähigkeit abgekühlt und granuliert. Das Granulat wurde bei 70°C im Vakuumtrockenschrank bis zur Gewichtskonstanz getrocknet.

Anschließend wurde das Granulat auf einer Spritzgieß-Maschine vom Typ Arburg SG370-173732 bei Massetemperaturen zwischen 270 und 300°C und Werkzeugtemperaturen zwischen 80 und 100°C zu Schulterstäben (4mm Dicke gemäß ISO 528), zu Flachstäben (80 mm·10 mm·4 mm) und zu Platten mit den Maßen 60 mm · 40 mm · 2 mm verarbeitet. Die Platten wurde anschließend auf die Maße 12,7 mm · 12,7 mm · 2 mm gefräst.

Die mechanischen Eigenschaften der aus den Formmassen hergestellten Erzeugnisse wurden im Zugversuch nach ISO 527 sowie im Schlagversuch nach ISO180-1U bestimmt; die Wärmeleitfähigkeit wurde an Platten mit den Maßen 12,7 mm · 12,7 mm · 2 mm nach ISO 22007-4 bestimmt.

Das Verschleißverhalten von Verarbeitungsmaschinen, im folgenden "Abrasion" genannt, insbesondere Extruder und Spritzgussmaschinen, wurde in Anlehnung an den Verschleißtest des DKI Darmstadt **(Veröffentlichung FG Kunststoffe, Projektnummer 12245 - Neue Verschleißapparaturen, Projekt-Nr. AiF 12245N (DKI 18/0-87), Laufzeit 01.12.1999 bis 28.02.2003)** nachgestellt. Die Abrasion wurde gravimetrisch anhand des Materialabtrags, welcher durch den Spritzguss von 100 Schuss (1 Schuss = 3D) einer Polyamid basierten Zusammensetzung, mit einer Einspritzgeschwindigkeit von v = 30 mm/s und einem Schneckendurchmesser von D = 35 mm, bei einer Massetemperatur 290°C, durch eine Düse bestehend aus zwei Metallplättchen (Stahl: 1.2738) mit den Abmessungen 12 x 12 und einer Schlitzbreite von 0,4 mm verursacht wird, bestimmt.

**Verwendete Materialien:**

Komponente a): Polyamid 6, linear mit einer Viskositätszahl bestimmt in einer 0.5 Gew.%-igen Lösung in 96%-iger Schwefelsäure bei 25°C, gemäß ISO307 von 108 ml/g

Komponente b): mit 3-Aminopropyltriethoxysilan oberflächenbehandeltes, monomodales Aluminiumoxid CT 3000 SG der Fa. Almatis GmbH mit einem d50-Wert von 0,5 $\mu$m und einer BET-Oberfläche von 7,8 m$^2$/g.

Thermostabilisator: Ultranox® 1098 von BASF SE

Talkum: Mikrotalkum Mistron® R10 von der Firma Imerys

Montanwachsester: Licowax® E von Clariant GmbH

Ruß: RKK Raven® 2000 von Colloids

Nigrosin: Solvent black 7

**Oberflächenbehandlung mit 3-Aminopropyltriethoxysilan**

Der Auftrag des Aminosilans auf das Aluminiumoxid CT 3000 SG der Fa. Almatis GmbH mit einem d50-Wert von 0,5 μm und einer BET-Oberfläche von 7,8 m$^2$/g erfolgte in der in WO 2009/156342 A1 beschriebenen Weise, indem 0,6 g 3-Aminopropyltriethoxysilan für 100g Al$_2$O$_3$ zunächst zur Silanolbildung in VE-Wasser (VE = vollentsalztes Wasser) vorgelegt (250ml VE-Wasser auf 100g Al$_2$O$_3$) und bei 25 °C (Zimmertemperatur) für 30 Minuten gerührt wurde. Anschließend gab man das Aluminiumoxid hinzu, rührte die Suspension bei 80 °C, saugte das oberflächenbehandelte Aluminiumoxid ab und wusch mit VE-Wasser. Anschließend wurde 5 Stunden bei Temperaturen von etwa 120 °C getrocknet und das oberflächenbehandelte Aluminiumoxid für 30 Minuten bei 200 °C getempert.

Die in **Tabelle 1** dargestellte Zusammensetzung wurde nach der oben beschriebenen Weise verarbeitet, wobei die Angaben in Gewichtsprozent sind.

**Tabelle 1**

| Inhaltsstoff | Beispiel 1 |
|---|---|
| Polyamid | 22 |
| mit Aminosilan oberflächenbehandeltes Aluminiumoxid | 77 |
| Thermostabilisator | 0,5 |
| Mikrotalkum | 0,01 |
| Montanwachsester | 0,2 |
| Nigrosin | 0,14 |
| Ruß | 0,15 |
| | |
| **Messergebnis** | |
| Schlagzähigkeit IZOD ungekerbt [kJ/m2] | 35 |
| Bruchdehnung [%] | 2,4 |
| Wärmeleitfähigkeit senkrecht zur Fließrichtung des Probekörpers [W/mK] | 1,6 |
| Wärmeleitfähigkeit in Fließrichtung des Probekörpers [W/mK] | 1,7 |
| Abrasion [mg] | 62 |

**Abrasionstest**

Der Abrasionstest wurde gemäß der Vorschrift in der **Veröffentlichung FG Kunststoffe, "Neu- und Weiterentwicklung von Modellprüfverfahren für den korrosiv/abrasiven Verschleiß bei der Kunststoffverarbeitung", Projekt-Nr. AiF 12245N (DKI 18/0-87), Laufzeit 01.12.1999 bis 28.02.2003** (siehe Beschreibung) durchgeführt und durch Differenzwägung der Metallplättchen vor und nach dem Versuch für Beispiel 1 ein Materialabtrag von 62 mg ermittelt. Ein Materialabtrag von lediglich 62 mg bedeutet eine geringe Abrasion. Im Sinne dieser Erfindung wird eine Abrasion mit Materialabträgen von <200 mg als vertretbar angesehen.

Die mechanischen Eigenschaften mit einer Bruchdehnung von 2.4% gemessen nach ISO527 an spritzfrischen Probekörpern und einer Schlagzähigkeit von 35 kJ/mol gemessen nach ISO180-1U an spritzfrischen Probekörpern sind im Sinne der vorliegenden Erfindung gute mechanische Eigenschaften und übererfüllen die in der Aufgabe gestellten Anforderungen von 1.5% Bruchdehnung gemessen nach ISO527 an spritzfrischen Probekörpern und einer Schlagzähigkeit von 20 kJ/m$^2$ gemessen nach ISO180-1U an spritzfrischen Probekörpern deutlich und bedeuten zudem gegenüber dem Stand der Technik keine Verschlechterung.

Die Wärmeleitfähigkeit von 1.6 W/mK gemessen senkrecht zur Fließrichtung des Probekörpers nach ISO 22007-4 sowie 1.7 W/mK gemessen in Fließrichtung des Probekörpers nach ISO 22007-4 sind im Sinne der vorliegenden Erfindung akzeptable Wärmeleitfähigkeiten und übererfüllen die in der Aufgabe zur vorliegenden Erfindung gestellten Anforderungen von mindestens 0.8 W/mK.

**Patentansprüche**

1.  Zusammensetzungen, daraus herzustellende Formmassen und darauf basierende Erzeugnisse enthaltend auf

    a) 100 Massenanteile wenigstens eines Polyamids, vorzugsweise Polyamid 6 und/oder Caprolactam-basierte Copolyamide und/oder Polyamid 66, mit einer Lösungsviskosität gemessen bei 25°C nach ISO 307 in einer 0,5 gew.-%igen Lösung in 96%-iger Schwefelsäure von <135 ml/g,
    b) 125 bis 600 Massenanteile mit wenigstens einem Aminosilan oberflächenbehandeltes Aluminiumoxid mit einer nach ISO 13320 mittels Laserbeugung zu bestimmenden monomodalen, volumenmittleren Partikelgrößenverteilung und einer volumenmittleren Partikelgröße d50 im Bereich von 0,1 bis 50 $\mu$m, wobei eine monomodale Partikelgrößenverteilung vorliegt, wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramms nur ein Maximum in Form einer Gauß'schen Kurve bildet und gegebenenfalls auftretende weitere Maxima ein Volumen von 1% nicht überschreiten,

2.  Zusammensetzungen, daraus herzustellende Formmassen und darauf basierende Erzeugnisse gemäß Anspruch 1, **dadurch gekennzeichnet, dass** als Oberflächenbehandlungsmittel des Aluminiumoxids wenigstens ein Aminosilan mit der allgemeinen Summenformel

    $$(RO)_3\text{-Si-}(CH_2)_n\text{-X}$$

    eingesetzt wird, worin

    R für einen organischen Rest ausgewählt aus der Gruppe Methyl, Ethyl, i-Propyl und Methoxymethyl steht,
    n für eine ganze Zahl von 0 bis 12 - Endwerte eingeschlossen - steht, und
    X für einen Rest $NR^1R^2$ steht und
    $R^1$ und $R^2$ jeweils unabhängig voneinander für Wasserstoff, für einen $C_1$-$C_6$-Alkylrest oder für einen $C_6$-$C_9$-Cycloalkylrest stehen.

3.  Zusammensetzungen, daraus herzustellende Formmassen und darauf basierende Erzeugnisse gemäß Anspruch 2, **dadurch gekennzeichnet, dass** für die Oberflächenbehandlung des Aluminiumoxids wenigstens ein Aminosilan aus der Gruppe 3-Aminopropyltriethoxysilan, 3-Aminopropyltrimethoxysilan, N-(2-aminoethyl)-3-aminopropyltrimethoxysilan, N-(2-aminoethyl)-3-aminopropyltriethoxysilan, 3-(N-cyclohexylamino)propyltrimethoxysilan und N,N-(Diethylaminomethyl)triethoxysilan eingesetzt wird.

4.  Zusammensetzungen, daraus herzustellende Formmassen und darauf basierende Erzeugnisse gemäß einem der Ansprüche 1 bis 3, **dadurch gekennzeichnet, dass** diese zusätzlich
    c) 0.13 bis 12.5 Massenanteile wenigstens eines Thermostabilisators ausgewählt aus der Gruppe der sterisch gehinderten Phenole, der sterisch gehinderten Phosphite, der sterisch gehinderten Phosphate, Hydrochinone, der aromatischen sekundären Amine, der substituierten Resorcine, Salicylate, Benzotriazole, Benzophenone, polyhydrische Alkohole oder Kupferhalogenide.

5.  Zusammensetzungen und daraus herzustellende Formmassen und darauf basierende Erzeugnisse gemäß Anspruch 4, **dadurch gekennzeichnet, dass** diese zusätzlich
    d) 0.001 bis 10 Massenanteile wenigstens eines Entformungsmittels enthalten.

6.  Zusammensetzungen und daraus herzustellende Formmassen und darauf basierende Erzeugnisse, gemäß Anspruch 4, **dadurch gekennzeichnet, dass** diese zusätzlich
    d) 0.001 bis 10 Massenanteile wenigstens eines Nukleierungsmittels, vorzugsweise Talkum, enthalten.

7.  Zusammensetzungen und daraus herzustellende Formmassen und darauf basierende Erzeugnisse, gemäß Anspruch 4, **dadurch gekennzeichnet, dass** diese zusätzlich d) 0.001 bis 10 Massenanteile wenigstens eines Nukleierungsmittels und wenigstens eines Entformungsmittels enthalten, wobei als Nukleierungsmittel vorzugsweise Talkum eingesetzt wird.

8.  Zusammensetzungen und daraus herzustellende Formmassen und darauf basierende Erzeugnisse gemäß Anspruch 5 und 7, **dadurch gekennzeichnet, dass** als Entformungsmittel langkettige Fettsäuren, deren Salze, sowie deren Esterderivate oder Amidderivate, Montanwachsester und deren Salze sowie niedermolekulare Polyethylen- bzw. Polypropylenwachse in oxidierter und nicht-oxidierter Form eingesetzt werden.

9. Zusammensetzungen und daraus herzustellende Formmassen und darauf basierende Erzeugnisse gemäß. Anspruch 7, **dadurch gekennzeichnet, dass** als Entformungsmittel Ester oder Amide gesättigter oder ungesättigter aliphatischer Carbonsäuren mit 8 bis 40 C-Atomen mit allphatischen gesättigten Alkoholen oder Aminen mit 2 bis 40 C-Atomen eingesetzt werden.

10. Zusammensetzungen und daraus herzustellende Formmassen und darauf basierende Erzeugnisse gemäß einem der Ansprüche 4 bis 9, **dadurch gekennzeichnet, dass** diese zusätzlich oder anstelle von Komponente d) noch e) 0.001 bis 150 Massenantelle wenigstens eines weiteren Additivs enthalten.

11. Zusammensetzungen und daraus herzustellende Formmassen und darauf basierende Erzeugnisse gemäß einem der Ansprüche 1 bis 10, **dadurch gekennzeichnet, dass** als Komponente b) mit wenigstens einem Aminosilan oberflächenbehandeltes $\alpha$-$Al_2O_3$ eingesetzt wird.

12. Verfahren zur Reduzierung der Abrasivität wärmeleitfähiger Polyamidzusammensetzungen und daraus herzustellender Formmassen, **dadurch gekennzeichnet, dass** Aluminiumoxid, das mit wenigstens einem Aminosilan oberflächenbehandelt ist, mit einer Polyamidzusammensetzung in Kontakt gebracht wird und die Polyamidzusammensetzung auf einem niedrigviskosen Polyamid mit einer Lösungsviskosität gemessen in einer 0,5 gew.-%igen Lösung in 96%iger Schwefelsäure nach ISO307 von <135 ml/g basiert und das Aluminiumoxid eine nach ISO 13320 mittels Laserbeugung zu bestimmende monomodale, volumenmittlere Partikelgrößenverteilung und eine volumenmittlere Partikelgröße d50 im Bereich von 0,1 bis 50 $\mu$m aufweist, wobei eine monomodale Partikelgrößenverteilung vorliegt, wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramms nur ein Maximum in Form einer Gauß'schen Kurve bildet und gegebenenfalls auftretende weitere Maxima ein Volumen von 1% nicht überschreiten.

13. Verwendung von mit wenigstens einem Aminosilan oberflächenbehandeltem Aluminiumoxid zur Reduzierung der Abrasion in Verarbeitungsmaschinen bei der Verarbeitung von Polyamidzusammensetzungen auf Basis eines niedrigviskosen Polyamids und darauf basierenden Polyamidformmassen und das Polyamid eine Lösungsviskosität gemessen in einer 0,5 gew.-%igen Lösung in 96%iger Schwefelsäure nach ISO307 von <135 ml/g aufweist, wobei das Aluminiumoxid eine nach ISO 13320 mittels Laserbeugung zu bestimmende monomodale, volumenmittlere Partikelgrößenverteilung und eine volumenmittlere Partikelgröße d50 im Bereich von 0,1 bis 50 $\mu$m aufweist und eine monomodale Partikelgrößenverteilung vorliegt, wenn die Auftragung des Volumens der Aluminiumoxid-Partikelgrößen in [%] auf der Y-Achse eines Histogramms gegen die Größenklasse in micrometer [$\mu$m] auf der X-Achse eines Histogramms nur ein Maximum in Form einer Gauß'schen Kurve bildet und gegebenenfalls auftretende weitere Maxima ein Volumen von 1% nicht überschreiten.

**Claims**

1. Compositions, moulding compounds producible therefrom and products based thereupon containing per

    a) 100 parts by mass of at least one polyamide, preferably polyamide 6 and/or caprolactam-based copolyamides and/or polyamide 66, having a solution viscosity measured at 25°C according to ISO 307 in a 0.5% by weight solution in 96% sulfuric acid of <135 ml/g,
    b) 125 to 600 parts by mass of aluminium oxide surface-treated with at least one aminosilane having a monomodal volume-average particle size distribution determinable by laser diffraction according to ISO 13320 and a volume-average particle size d50 in the range from 0.1 to 50 $\mu$m, wherein a monomodal particle size distribution is present if the plot of the volume of the aluminium oxide particle sizes in [%] on the Y-axis of a histogram against the size class in micrometres [$\mu$m] on the X-axis of a histogram forms only one maximum in the form of a Gaussian curve and if any further maxima do not exceed a volume of 1%.

2. Compositions, moulding compounds producible therefrom and products based thereupon according to Claim 1, **characterized in that** as surface treatment agent of the aluminium oxide at least one aminosilane of general empirical formula

$$(RO)_3\text{-}Si\text{-}(CH_2)_n\text{-}X$$

is employed, wherein

R represents an organic radical selected from the group of methyl, ethyl, i-propyl and methoxymethyl,

n is an integer from 0 to 12 inclusive and

X represents a radical $NR^1R^2$ and

$R^1$ and $R^2$ each independently represent hydrogen, a $C_1$-$C_6$-alkyl radical or a $C_6$-$C_9$-cycloalkyl radical.

3. Compositions, moulding compounds producible therefrom and products based thereupon according to Claim 2, **characterized in that** for the surface treatment of the aluminium oxide is at least one aminosilane is employed from the group of 3-aminopropyltriethoxysilane, 3-aminopropyltrimethoxysilane, N-(2-aminoethyl)-3-aminopropyltrimethoxysilane, N-(2-aminoethyl)-3-aminopropyltriethoxysilane, 3-(N-cyclohexylamino)propyltrimethoxysilane and N,N-(diethylaminomethyl)triethoxysilane.

4. Compositions, moulding compounds producible therefrom and products based thereupon according to any of Claims 1 to 3, **characterized in that** these additionally

c) 0.13 to 12.5 parts by mass of at least one heat stabilizer selected from the group of sterically hindered phenols, sterically hindered phosphites, sterically hindered phosphates, hydroquinones, aromatic secondary amines, substituted resorcinols, salicylates, benzotriazoles, benzophenones, polyhydric alcohols or copper halides.

5. Compositions and moulding compounds producible therefrom and products based thereupon according to Claim 4, **characterized in that** these additionally contain

d) 0.001 to 10 parts by mass of at least one demoulding agent.

6. Compositions and moulding compounds producible therefrom and products based thereupon according to Claim 4, **characterized in that** these additionally contain

d) 0.001 to 10 parts by mass of at least one nucleating agent, preferably talc.

7. Compositions and moulding compounds producible therefrom and products based thereupon according to Claim 4, **characterized in that** these additionally contain

d) 0.001 to 10 parts by mass of at least one nucleating agent and at least one demoulding agent, wherein the employed nucleating agent is preferably talc.

8. Compositions and moulding compounds producible therefrom and products based thereupon according to Claims 5 and 7, **characterized in that** the employed demoulding agents are long-chain fatty acids, salts thereof and also ester or amide derivatives thereof, montan wax esters and salts thereof and also low molecular weight polyethylene waxes or polypropylene waxes in oxidized and non-oxidized form.

9. Compositions and moulding compounds producible therefrom and products based thereupon according to Claim 7, **characterized in that** the employed demoulding agents are esters or amides of saturated or unsaturated aliphatic carboxylic acids having 8 to 40 carbon atoms with aliphatic saturated alcohols or amines having 2 to 40 carbon atoms.

10. Compositions and moulding compounds producible therefrom and products based thereupon according to any of Claims 4 to 9, **characterized in that** alternatively or in addition to component d) these contain

e) 0.001 to 150 parts by mass of at least one further additive.

11. Compositions and moulding compounds producible therefrom and products based thereupon according to any of Claims 1 to 10, **characterized in that** employed component b) is $\alpha$-$Al_2O_3$ surface-treated with at least one aminosilane.

12. Process for reducing the abrasiveness of thermally conductive polyamide compositions and moulding compounds producible therefrom, **characterized in that** aluminium oxide surface-treated with at least one aminosilane is brought into contact with a polyamide composition and the polyamide composition is based on a low-viscosity polyamide having a solution viscosity measured in a 0.5% by weight solution in 96% sulfuric acid according to ISO307 of <135 ml/g and the aluminium oxide has a monomodal volume-average particle size distribution determinable by laser diffraction according to ISO 13320 and a volume-average particle size d50 in the range from 0.1 to 50 $\mu$m, wherein a monomodal particle size distribution is present if the plot of the volume of the aluminium oxide particle sizes in [%] on the Y-axis of a histogram against the size class in micrometres [$\mu$m] on the X-axis of a histogram forms only one maximum in the form of a Gaussian curve and if any further maxima do not exceed a volume of 1%.

13. Use of aluminium oxide surface-treated with at least one aminosilane for reducing abrasion in processing machines during processing of polyamide compositions based on a low-viscosity polyamide and polyamide moulding compounds based thereupon, wherein the polyamide has a solution viscosity measured in a 0.5% by weight solution in 96% sulfuric acid according to ISO307 of <135 ml/g, wherein the aluminium oxide has a monomodal volume-average particle size distribution determinable by laser diffraction according to ISO 13320 and a volume-average particle size d50 in the range from 0.1 to 50 $\mu$m and a monomodal particle size distribution is present if the plot of the volume of the aluminium oxide particle sizes in [%] on the Y-axis of a histogram against the size class in micrometres [$\mu$m] on the X-axis of a histogram forms only one maximum in the form of a Gaussian curve and if any further maxima do not exceed a volume of 1%.

## Revendications

1. Compositions, masses à mouler pouvant être produites à partir de celles-ci et articles manufacturés à base de celles-ci, comprenant

   a) 100 parties en masse d'au moins un polyamide, de préférence un polyamide 6 et/ou des copolyamides à base de caprolactame et/ou un polyamide 66, présentant une viscosité en solution, mesurée à 25 °C selon la norme ISO 307 dans une solution à 0,5 % en poids dans de l'acide sulfurique à 96 %, de < 135 ml/g,
   b) 125 à 600 parties en masse d'oxyde d'aluminium traité en surface par au moins un aminosilane et présentant une distribution de taille de particule moyenne volumique monomodale à déterminer selon la norme ISO 13320 par diffraction laser et une taille de particule moyenne volumique d50 se situant dans la plage de 0,1 à 50 $\mu$m, une distribution de taille de particule monomodale étant présente lorsque le tracé du volume des tailles de particules d'oxyde d'aluminium en [%] sur l'axe Y d'un histogramme par rapport à la classe de taille en micromètres [$\mu$m] sur l'axe X d'un histogramme ne forme qu'un seul maximum sous la forme d'une courbe gaussienne et que les éventuels autres maxima se produisant ne dépassent pas un volume de 1 %.

2. Compositions, masses à mouler pouvant être produites à partir de celles-ci et articles manufacturés à base de celles-ci selon la revendication 1, **caractérisés en ce que** comme l'agent de traitement de surface de l'oxyde d'aluminium utilisé au moins un aminosilane de formule brute générale

   $$(RO)_3\text{-Si-}(CH_2)_n\text{-X}$$

   est utilisé, dans laquelle

   R est un radical organique choisi dans le groupe constitué de méthyle, éthyle, isopropyle et méthoxyméthyle,
   n représente un entier compris entre 0 et 12 - valeurs de fin incluses -, et
   X représente un radical $NR^1R^2$ et
   $R^1$ et $R^2$ représentent chacun indépendamment l'hydrogène, un radical alkyle en $C_1$-$C_6$ ou un radical cycloalkyle en $C_6$-$C_9$.

3. Compositions, masses à mouler pouvant être produites à partir de celles-ci et articles manufacturés à base de celles-ci selon la revendication 2, **caractérisés en ce que**, pour le traitement de surface de l'oxyde d'aluminium, on utilise au moins un aminosilane choisi dans le groupe 3-aminopropyltriéthoxysilane, 3-aminopropyltriméthoxysilane, N-(2-aminoéthyl)-3-aminopropyltriméthoxysilane, N-(2-aminoéthyl)-3-aminopropyl-triéthoxysilane, 3-(N-cyclohexylamino)propyltriméthoxysilane et N,N-(diéthylaminométhyl)triéthoxysilane.

4. Compositions, masses à mouler pouvant être produites à partir de celles-ci et articles manufacturés à base de celles-ci selon l'une quelconque des revendications 1 à 3, **caractérisés en ce qu'**ils contiennent en outre
   c) 0,13 à 12,5 parties en masse d'au moins un stabilisant thermique choisi dans le groupe des phénols à encombrement stérique, des phosphites à encombrement stérique, des phosphates à encombrement stérique, des hydroquinones, des amines secondaires aromatiques, des résorcinols substitués, des salicylates, des benzotriazoles, des benzophénones, des alcools polyhydriques ou des halogénures de cuivre.

5. Compositions et masses à mouler pouvant être produites à partir de celles-ci et articles manufacturés à base de celles-ci selon la revendication 4, **caractérisés en ce qu'**ils contiennent en outre

d) 0,001 à 10 parties en masse d'au moins un agent de démoulage.

6. Compositions et masses à mouler pouvant être produites à partir de celles-ci et articles manufacturés à base de celles-ci selon la revendication 4, **caractérisés en ce qu'**ils contiennent en outre
d) 0,001 à 10 parties en masse d'au moins un agent de nucléation, de préférence le talc.

7. Compositions et masses à mouler pouvant être produites à partir de celles-ci et articles manufacturés à base de celles-ci selon la revendication 4, **caractérisés en ce qu'**ils contiennent en outre
d) 0,001 à 10 parties en masse d'au moins un agent de nucléation et d'au moins un agent de démoulage, le talc étant de préférence utilisé comme agent de nucléation.

8. Compositions et masses à mouler pouvant être produites à partir de celles-ci et articles manufacturés à base de celles-ci selon les revendications 5 et 7, **caractérisées en ce que** l'on utilise comme agents de démoulage des acides gras à chaîne longue, leurs sels et leurs dérivés esters ou leurs dérivés amides, des esters de cires de montan et leurs sels, ainsi que des cires de polyéthylène ou de polypropylène de faible poids moléculaire sous forme oxydée et non oxydée.

9. Compositions et masses à mouler pouvant être produites à partir de celles-ci et articles fabriqués à base de celles-ci selon la revendication 7, **caractérisées en ce que** l'on utilise comme agents de démoulage des esters ou des amides d'acides carboxyliques aliphatiques saturés ou insaturés ayant de 8 à 40 atomes de carbone avec des alcools aliphatiques saturés ou des amines ayant de 2 à 40 atomes de carbone.

10. Compositions et masses à mouler pouvant être produites à partir de celles-ci et articles manufacturés à base de celles-ci selon l'une quelconque des revendications 4 à 9, **caractérisés en ce qu'**ils contiennent en outre ou à la place du constituant d)
e) 0,001 à 150 parties en masse d'au moins un autre additif.

11. Compositions et masses à mouler pouvant être produites à partir de celles-ci et articles manufacturés à base de celles-ci selon l'une quelconque des revendications 1 à 10, **caractérisées en ce que** l'on utilise comme constituant b) de l'$\alpha$-Al$_2$O$_3$ traité en surface par au moins un aminosilane.

12. Procédé pour réduire le pouvoir abrasif de compositions de polyamide thermoconductrices et de masses à mouler pouvant être produites à partir de celles-ci, **caractérisé en ce que** de l'oxyde d'aluminium ayant été traité en surface par au moins un aminosilane est mis en contact avec une composition de polyamide et **en ce que** la composition de polyamide est à base d'un polyamide de faible viscosité présentant une viscosité en solution, mesurée dans une solution à 0,5 % en poids dans de l'acide sulfurique à 96 % selon la norme ISO307, de < 135 ml/g et **en ce que** l'oxyde d'aluminium présente une distribution de taille de particule moyenne volumique monomodale à déterminer selon la norme ISO 13320 par diffraction laser et une taille de particule moyenne volumique d50 se situant dans la plage de 0,1 à 50 $\mu$m, une distribution de taille de particule monomodale étant présente lorsque le tracé du volume des tailles de particules d'oxyde d'aluminium en [%] sur l'axe Y d'un histogramme par rapport à la classe de taille en micromètres [$\mu$m] sur l'axe X d'un histogramme ne forme qu'un seul maximum sous la forme d'une courbe gaussienne et que les éventuels autres maxima se produisant ne dépassent pas un volume de 1 %.

13. Utilisation d'oxyde d'aluminium traité en surface par au moins un aminosilane pour réduire l'abrasion dans des machines de traitement lors du traitement de compositions de polyamide à base d'un polyamide de faible viscosité et de masses à mouler de polyamide à base de celui-ci, et le polyamide présentant une viscosité en solution, mesurée dans une solution à 0,5 % en poids dans de l'acide sulfurique à 96 % selon la norme ISO307, de < 135 ml/g, l'oxyde d'aluminium présentant une distribution de taille de particule moyenne volumique monomodale à déterminer selon la norme ISO 13320 par diffraction laser et une taille de particule moyenne volumique d50 se situant dans la plage de 0,1 à 50 $\mu$m, et une distribution de taille de particule monomodale étant présente lorsque le tracé du volume des tailles de particules d'oxyde d'aluminium en [%] sur l'axe Y d'un histogramme par rapport à la classe de taille en micromètres [$\mu$m] sur l'axe X d'un histogramme ne forme qu'un seul maximum sous la forme d'une courbe gaussienne et que les éventuels autres maxima se produisant ne dépassent pas un volume de 1 %.

**Fig.1**

**Fig.2**

Verschleißplättchen

Distanzbleche

12

15

5

$V_{melt}$

12

0,40

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010025857 A1
- WO 2009019186 A1
- DE 102011084519 A1
- EP 3164694 A1
- DE 19802141 C1
- EP 1972921 A1
- DE 102009056503 A1
- DE 102004056520 A1
- DE 4313688 A1
- DE 4119240 C2
- DD 278859 A1

- DD 260764 A1
- DD 232760 A1
- DE 19628348 C1
- DE 69406683 T2
- DE 10218413 B4
- DE 4129105 A1
- WO 2009156342 A1
- EP 1628916 B1
- DE 4236122 A
- WO 2013083247 A1

**In der Beschreibung aufgeführte Nicht-Patentliteratur**

- **H. DOMININGHAUS** ; **DIE KUNSTSTOFFE**. Eigenschaften. VDI-Verlag, 2012, vol. 8, 605-607
- *CHEMICAL ABSTRACTS*, 1344-28-1
- *CHEMICAL ABSTRACTS*, 919-30-2
- *CHEMICAL ABSTRACTS*, 13822-56-5
- *CHEMICAL ABSTRACTS*, 1760-24-3
- *CHEMICAL ABSTRACTS*, 5089-72-5
- *CHEMICAL ABSTRACTS*, 3068-78-8
- *CHEMICAL ABSTRACTS*, 15180-47-9

- *CHEMICAL ABSTRACTS*, 23128-74-7
- *CHEMICAL ABSTRACTS*, 73138-45-1
- Plastics Additives Handbook. Hanser-Verlag, 2001, vol. 688, 872-874
- *CHEMICAL ABSTRACTS*, 1078142-02-5
- *CHEMICAL ABSTRACTS*, 225789-38-8
- Kunststoff-Handbuch 3/4, Polyamide. Carl Hanser Verlag, 1998, 374-384